(19) Europäisches Patentamt
European Patent Office
Office européen des brevets

(11) **EP 3 875 611 B1**

(12) **EUROPÄISCHE PATENTSCHRIFT**

(45) Veröffentlichungstag und Bekanntmachung des Hinweises auf die Patenterteilung:
**22.01.2025 Patentblatt 2025/04**

(21) Anmeldenummer: **21154979.5**

(22) Anmeldetag: **03.02.2021**

(51) Internationale Patentklassifikation (IPC):
*C21D 8/04* (2006.01)    *C21D 9/48* (2006.01)
*C22C 38/00* (2006.01)   *C22C 38/02* (2006.01)
*C22C 38/04* (2006.01)   *C22C 38/06* (2006.01)
*C23C 8/02* (2006.01)    *C23C 8/26* (2006.01)
*C23C 8/80* (2006.01)

(52) Gemeinsame Patentklassifikation (CPC):
**C22C 38/001; C21D 8/0426; C21D 8/0436; C21D 8/0473; C21D 9/48; C22C 38/02; C22C 38/04; C22C 38/06; C23C 8/02; C23C 8/26; C23C 8/80**

(54) **KALTGEWALZTES STAHLFLACHPRODUKT FÜR VERPACKUNGEN**

COLD-ROLLED STEEL SHEET PRODUCT FOR PACKAGES

PRODUIT EN ACIER LAMINÉ À FROID POUR EMBALLAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2020 DE 102020106164**

(43) Veröffentlichungstag der Anmeldung:
**08.09.2021 Patentblatt 2021/36**

(73) Patentinhaber: **ThyssenKrupp Rasselstein GmbH 56626 Andernach (DE)**

(72) Erfinder:
• **Kaup, Burkhard 56626 Andernach (DE)**
• **Massicot, Blaise 56659 Burgbrohl (DE)**
• **Heine, Luisa-Marie 56068 Koblenz (DE)**

(74) Vertreter: **Charrier Rapp & Liebau Patentanwälte PartG mbB Fuggerstraße 20 86150 Augsburg (DE)**

(56) Entgegenhaltungen:
EP-A1- 3 138 936      EP-A1- 3 186 401
WO-A1-2005/068667     WO-A1-2016/031234
US-A1- 2011 076 177

**Beschreibung**

Die Erfindung betrifft ein kaltgewalztes Stahlflachprodukt für Verpackungen.

Aus Gründen der Ressourceneffizienz und der Kostenreduzierung bestehen Bestrebungen, die Dicke von Stahlflachprodukten (Stahlbleche und Stahlbänder) für die Herstellung von Verpackungen (im Folgenden auch als Verpackungsstahl bezeichnet) zu reduzieren. Übliche Dicken von kaltgewalzten Verpackungsstählen liegen im Feinstblechbereich, also zwischen 0,1 und 0,6 mm. Da eine Dickenreduktion jedoch eine Erniedrigung der Steifigkeit des Materials zur Folge hat, muss die Festigkeit des Verpackungsstahls erhöht werden, damit das Material den Anforderungen an die Kaltverformbarkeit in Umformprozessen bei der Herstellung von Verpackungen, wie z.B. beim Tiefziehen oder Abstreckziehen, standhalten kann. Gleichzeitig muss jedoch auch die Umformfähigkeit des Stahlblechs bei der Kaltverformung gewährleistet bleiben. Es besteht daher ein Bedürfnis für hochfeste Stahlbleche mit einer Streckgrenze von mehr als 550 MPa, welche gleichzeitig gute Kenngrößen für die Umformfähigkeit wie z.B. eine Bruchdehnung von wenigstens 5% und/oder einen Erichsenindex (gem. DIN 50101 auch als Erichsentiefung bezeichnet, gemessen nach der in DIN EN ISO 20482 standardisierten Tiefungsprüfung nach Erichsen) von mindestens 5 mm aufweisen.

Es existieren zahlreiche Möglichkeiten für die Festigkeitssteigerung von Stahlblechen, wie z.B. Kaltverfestigung, Mischkristallverfestigung (durch Zulegieren von Kohlenstoff, Stickstoff Phosphor, Mangan und/oder Silizium), Ausscheidungsverfestigung, Festigkeitssteigerung durch Einstellung eines mehrphasigen Stahlgefüges oder Feinkornhärtung. Viele dieser Maßnahmen zur Festigkeitssteigerung von Stählen haben jedoch unerwünschte Begleiterscheinungen.

Mit zunehmender Kaltverfestigung nehmen bspw. Längs- und Querunterschiede in der Fertigung von kaltgewalzten Stahlblechen und folglich die Anisotropie zu und gleichzeitig fällt die Dehnbarkeit überproportional ab.

Bei der Mischkristallverfestigung werden Fremdatome (beispielsweise N, C, P, Mn, Si) interstitiell oder substitutionell im Wirtsgitter des Stahls eingelagert. Viele der möglichen Legierungselemente haben allerdings negative Begleiterscheinungen (so ist P bspw. ein Stahlschädling, Mn und Si verschlechtern die Oberflächenqualität), weswegen eine Festigkeitssteigerung durch Zugabe dieser Legierungselemente nicht zielführend ist.

Durch Zulegieren von Kohlenstoff steigt zwar die Festigkeit des Stahls mit zunehmendem Kohlenstoffgehalt an, gleichzeitig entsteht jedoch während der Verarbeitung des Stahlblechs eine ausgeprägte Anisotropie in Form einer Zeiligkeit, da der Kohlenstoff aufgrund der niedrigen Löslichkeit im Ferritgitter des Stahls maßgeblich in Form von Zementit vorliegt. Darüber hinaus verschlechtert sich mit zunehmendem Kohlenstoffgehalt die Oberflächenqualität und die Gefahr von Brammenrissen steigt mit Annäherung an den peritektischen Punkt. Deshalb ist eine Begrenzung des Kohlenstoffgehalts auf 0,1 Gew. % notwendig, da nur so effektiv die Bildung von Brammenrissen und die daraus resultierende punktförmige Oxidation (Diffusion von Sauerstoff in Risse) vermieden werden können.

Aus dem Stand der Technik sind Stahlbleche für Verpackungen und Verfahren zu deren Herstellung bekannt, in denen der Stahlschmelze eine für eine Mischkristallverfestigung ausreichende Menge an Kohlenstoff und Stickstoff zugegeben wird, um Festigkeiten von mehr als 500 MPa zu erzielen. So zeigt bspw. die US 2011/0076177 A1 ein hochfestes Stahlblech für die Dosenherstellung mit einem auf das Gewicht bezogenen Kohlenstoffgehalt von 0,02 % bis 0,10 % und einem Stickstoffgehalt von 0,012 % bis 0,0250 %, welches Zugfestigkeiten von mehr als 500 MPa aufweist, wobei der ungebundene, d.h. interstitiell im Stahl eingelagerte Gewichtsanteil des Stickstoffs bei mindestens 0,0100 % liegt. Dabei wurde festgestellt, dass insbesondere der ungebundene Stickstoff zu einer Steigerung der Festigkeit des Stahls durch Mischkristallverfestigung und Alterungshärten beiträgt. Die durch eine interstitielle Einlagerung von Stickstoff erzielbare Festigkeitssteigerung ist dabei allerdings einerseits durch teilweise Abbindung des Stickstoffs zu Nitriden, insbesondere zu AlN, und andererseits dadurch begrenzt, dass bei einem Stickstoffgehalt von mehr als 0,025 % die Gefahr von Brammenbrüchen beim Warmwalzen beträchtlich zunimmt. Aus WO2005/068667 ist ein Stahlblech für Verpackungen bekannt.

Bei einer Ausscheidungsverfestigung, bspw. durch Zulegieren von Ti oder Nb, besteht ein Problem darin, dass sich aufgrund der hohen Temperatur bereits beim Warmwalzen Ausscheidungen bilden. Folglich sind diese an allen nachfolgenden Fertigungsstufen, wie Kaltwalzen, Glühen und ggf. Nachwalzen oder Dressieren, beteiligt und entwickeln dabei, vergleichbar zum Zementit, eine ausgeprägte Anisotropie, insbesondere wenn die Ausscheidung bevorzugt auf Korngrenzen erfolgt. Ferner tragen die Ausscheidungsbildner Ti und Nb zu einer Erhöhung der Rekristallisationstemperatur bei.

Die Festigkeitssteigerung durch Ausbildung eines mehrphasigen Gefüges im Stahl ist bei Verpackungsstahl aufgrund der normativen Vorgaben in Bezug auf die Legierungsbestandteile des Stahls vornherein sehr begrenzt. Die konventionellen Mehrphasenstähle, wie sie z.B. in der Automobilindustrie Einsatz finden, können daher für Verpackungsstahl nicht verwendet werden, weil bspw. die zur Ausbildung eines Mehrphasengefüges verwendeten Legierungsbestandteile wie Mangan und Silizium in Verpackungsstählen aufgrund der normativen Vorgaben durch die Verpackungsstahlnorm (DIN EN 10202) nur bis zu einem maximalen Gewichtsanteil eingesetzt werden können. Die Einstellung eines mehrphasigen Gefüges ist zwar bei Verpackungsstahl mittels einer speziellen Kühltechnik möglich. Die resultierenden Gefügezustände zeichnen sich jedoch durch eine hohe Instabilität aus und der Festigkeitsanstieg geht zumeist einher mit einer Reduktion der Umformbarkeit. Falls das mehrphasige Gefüge maßgeblich auf dem Legierungselement Kohlenstoff basiert, besteht ferner die Gefahr, dass die Anisotropie des Zementits an das mehrphasige Gefüge weitergegeben wird und sich dadurch noch verstärkt.

Bei der Feinkornhärtung ist zwar über die Einstellung eines feinkörnigen Gefüges die Festigkeit des Stahls bei gleichbleibender Umformfähigkeit steigerbar, wobei das feinkörnige Gefüge prozesstechnisch über eine niedrige Haspeltemperatur (Aufwickeltemperatur nach dem Warmwlazen), hohe Kaltwalzgrade und durch Glühen des kaltgewalzten Stahlblechs im Durchlaufglühen erzielt werden kann. Ferner lässt sich die Ausbildung eines feinkörnigen Gefüges über Mikrolegierung und Einflussnahme auf das Ausscheidungsverhalten im Warmband einstellen. Die dafür notwendigen Legierungselemente sind jedoch teuer und steigern die zur Rekristallisation notwendige Glühtemperatur. Darüber hinaus verschlechtert sich aufgrund einer erhöhten Grundfestigkeit des Warmbandes die Kaltwalzbarkeit und die Oberfläche des Stahlblechs wird fehleranfälliger.

Die genannten Möglichkeiten zur Erhöhung der Festigkeit von Stahlblechen unter Beibehaltung der Umformfähigkeit führen demnach insbesondere in Bezug auf die Isotropie, d.h. bezüglich der Richtungsabhängigkeit der Werkstoffeigenschaften, zu Problemen. Da Verpackungen wie z.B. Getränke- oder Konservendosen, zumeist (rotations-)symmetrische Bauteile sind, liegen die Stahlbleche, die zur Herstellung von Verpackungen verwendet werden, häufig in Form von Ronden (d.h. eines ebenen, kreisrunden Blechzuschnitts) vor, die in Tiefzieh- und Abstreckziehverfahren zu einem zylindrischen Dosenkörper oder einem kreisförmigen Dosenboden oder -deckel umgeformt werden. Aufgrund der Symmetrie des Endprodukts werden deshalb für die Bleche möglichst isotrope Materialeigenschaften gefordert, d.h. die Eigenschaften von Verpackungsblechen sollen in allen Richtungen der Blechebene möglichst gleich sein. Bei kaltgewalzten Stahlblechen, die fertigungsbedingt in Form eines Stahlbands vorliegen, ist dies sehr anspruchsvoll, da durch die Walzrichtung beim Warmwalzen und Kaltwalzen fertigungsbedingt immer eine Richtungsabhängigkeit der Materialeigenschaften vorhanden ist. Kaltgewalzte Stahlbleche weisen deshalb herstellungsbedingt stets eine ausgeprägte Anisotropie auf. Diese begründet sich maßgeblich im hohen Kaltwalzgrad, welcher wiederum notwendig zur Realisierung der extrem dünnen Blechdicken ist. Da die Verarbeitung des kaltgewalzten Stahlblechs bei der Herstellung von Verpackungen grundsätzlich unabhängig von der Walzrichtung erfolgt, treten beim Umformprozess häufig Schwierigkeiten auf, da bspw. die Festigkeit und die Umformfähigkeit über den Umfang der Ronde nicht homogen sind.

Es besteht daher ein Bedürfnis für einen Verpackungsstahl in Form eines kaltgewalzten Stahlflachprodukts, welches sich über möglichst isotrope Eigenschaften innerhalb der Blechebene des Stahlflachprodukts auszeichnet. Im Kontext der kontinuierlichen Dickenreduzierung des Stahlflachprodukts und der dafür notwendigen Festigkeitssteigerung stellt dies eine gegensätzliche Zielsetzung dar, welche schwierig zu realisieren ist. Weiterhin sind neben den isotropen Eigenschaften des Stahlflachprodukts weitere Anforderung an die Verpackungsstähle bei der Herstellung von Verpackungen zu berücksichtigen, insbesondere in Bezug auf die Flexibilität der Umformprozesse und die Formen der Verpackungen, die Reduzierung des Materialausschusses sowie die hierfür notwendige Realisierung von möglichst gleichförmigen und homogenen Eigenschaften der Verpackung.

Eine Aufgabe der Erfindung besteht daher in der Bereitstellung eines hochfesten Stahlflachprodukts zur Herstellung von Verpackungen mit möglichst isotropen Materialeigenschaften in der Blechebene, aus dem Verpackungen mit überragenden isotropen Eigenschaften und mit unterschiedlichsten Geometrien sowie in verschiedenen Umformverfahren mit möglichst geringem Materialausschuss herstellbar sind.

Da Verpackungsstahl im gealterten Zustand, d.h. nach längerer Lagerungsdauer und ggf. nach einer Lackierung und Trocknung, zur fertigen Verpackung verarbeitet wird, muss eine Werkstoffoptimierung unter Berücksichtigung der Effekte bei einer Alterung des Materials erfolgen, welche nach einer längeren Lagerung und/oder einer Lackierung mit anschließender Trocknung eintreten. Die technologischen Kennwerte von Verpackungsstählen werden deshalb nach einer künstlichen Alterung des Materials erfasst, welche gemäß der Norm DIN EN 10202 durch Erwärmung der Probe für 20 Minuten auf 200°C erfolgen kann. Da bei der (natürlichen oder künstlichen) Alterung von Stahlblechen insbesondere die Festigkeit und Umformfähigkeit beeinflusst wird, müssen die Alterungseffekte bei der Optimierung der Materialeigenschaften berücksichtigt werden.

Die Verbesserung der Materialeigenschaften von kaltgewalzten Stahlblechen in Bezug auf Festigkeit und Umformfähigkeit geht wegen der oben aufgeführten Gründe zu Lasten der Isotropie der Materialeigenschaften. Zur Erzielung von isotropen Eigenschaften von Stahlblechen existieren diverse metallurgische und verfahrenstechnische Möglichkeiten bei der Herstellung kaltgewalzter Stahlbleche. Eine Option, gezielt die Isotropie von kaltgewalzten Stahlblechen zu verbessern, besteht bspw. im Zulegieren von Bor. Bor hat jedoch nachteilige Auswirkungen auf die Verarbeitbarkeit des Stahls und das Endprodukt (Stahlblech). So steigt durch die Zulegierung von Bor die für eine Rekristallisation des Stahlblechs nach dem Kaltwalzen notwendige Glühtemperatur, die Schweißbarkeit des Materials verschlechtert sich und das Alterungspotential (d.h. die Festigkeitssteigerung bei einer Alterung des Stahlblechs) nehmen ab.

Eine weitere Aufgabe der Erfindung ist daher darin zu sehen, kostengünstig herstellbare Verpackungsstähle und Verfahren zu deren Herstellung aufzuzeigen, die einerseits eine möglichst hohe Festigkeit unter Beibehaltung einer für das Tiefziehen und Abstreckziehen ausreichend guten Umformfähigkeit und andererseits eine möglichst hohe Isotropie der Materialeigenschaften in Bezug auf Festigkeit und Umformfähigkeit im gealterten Zustand des Materials aufweisen.

Die genannten Aufgaben werden gemäß der Erfindung mit einem Stahlflachprodukt mit den Merkmalen des Anspruchs 1 gelöst. Unter einem Stahlflachprodukt wird dabei ein tafel- oder bandförmiges Stahlblech mit einer Dicke im Feinstblechbereich, insbesondere im Dickenbereich von 0,1 mm bis 0,6 mm, verstanden.

Die Erfindung geht von der Erkenntnis aus, dass die Mischkristallverfestigung mittels interstitiell eingelagerter Legierungsbestandteile des Stahls eine gleichzeitige Verbesserung von Festigkeit, Umformfähigkeit und Isotropie ermöglicht und dass sich eine Mischkristallverfestigung durch Kohlenstoff und Stickstoff dabei als besonders effektiv erweist, vorausgesetzt eine Abbindung des Kohlenstoffs und Stickstoffs zu Karbiden und Nitriden kann prozesstechnisch zumindest weitgehend unterdrückt werden. Die Ausbildung von Karbiden und Nitriden würde die Ausbildung anisotroper Eigenschaften fördern.

Eine weitere, der Erfindung zugrundeliegende Erkenntnis ist dabei, dass das Einbringen von Stickstoff durch Aufstickung eines kaltgewalzten Stahlflachprodukts in einem Glühofen unter Anwesenheit eines Stickstoffdonors, zum Ende der Herstellungsroute von Verpackungsstahl, in besonderem Maße geeignet ist, um sowohl eine effektive Mischkristallverfestigung durch Stickstoff zu realisieren als auch die Isotropie der für die Weiterverarbeitung des Stahlflachprodukts bei der Herstellung von Verpackungen relevanten Materialeigenschaften, insbesondere die Dehngrenze und die Bruchdehnung, zu verbessern. Es hat sich nämlich gezeigt, dass das Aufsticken in einem Glühofen, anders als die Erhöhung des Stickstoffgehalts durch Einbringen von Stickstoff in die Stahlschmelze, im Wesentlichen zu einer interstitiellen Einlagerung von Stickstoff ohne das Abbinden des Stickstoffs zu Nitriden führt.

Es wurde dabei in überraschender Weise festgestellt, dass sich der beim Aufsticken im Glühofen (insbesondere in einem Durchlaufglühofen vor oder während des Rekristallisationsglühens) in dem kaltgewalzten Stahlflachprodukt interstitiell eingelagerte Stickstoff positiv auf die Umformfähigkeit und Isotropie der Materialeigenschaften auswirkt. Die interstitielle Einlagerung von Stickstoff bewirkt offenbar aufgrund einer gleichmäßigen Verteilung des Stickstoffs im (Ferrit-)Gitter des Stahls eine herausragende Isotropie der mechanischen Eigenschaften des Stahlflachprodukts.

Hierzu trägt ferner bei, dass bei der interstitiellen Einlagerung von Stickstoff, im Vergleich zu Kohlenstoff, die Lage des peritektischen Punktes zu höheren Legierungsgehalten verschoben wird und deshalb eine Einlagerung von großen Mengen an Stickstoff auf Zwischengitterplätzen des Stahlgitters in Bezug auf die Oberflächenqualität und die Gefahr von Brammenrissen wesentlich unkritischer ist als bei Kohlenstoff. Um Brammenrisse zu vermeiden wird der Gewichtsanteil des Kohlenstoffs in dem erfindungsgemäßen Stahlflachprodukt auf 0,10 % begrenzt.

Für die Einlagerung von Stickstoff besteht dagegen nur in Bezug auf die Grenze der Löslichkeit von Stickstoff im Ferrit-Gitter des Stahls sowie die Wirtschaftlichkeit des Herstellungsverfahrens eine Begrenzung des Stickstoffgehalts, welche unter Berücksichtigung der Löslichkeitsgrenze von Stickstoff im Ferritgitter von ca. 0,1 Gew.% und einer teilweisen Abbindung des Stickstoffs in Nitriden bei Anwesenheit starker Nitridbildner wie Al, Ti, Nb und/oder B, im Stahl bei maximal 0,120 Gew.% liegt. Aus prozesstechnologischer Sicht liegt der Stickstoffgehalt des aufgestickten Stahlflachprodukts der Erfindung bevorzugt bei höchstens 0,070 Gew.%, da eine darüber hinaus gehende Aufstickung des kaltgewalzten Stahlflachprodukts im (Durchlauf-)glühofen nur unter sehr hohem technologischen Aufwand realisierbar ist, der sich jedenfalls aktuell wirtschaftlich nicht rechnet. Aus prozesstechnologischen und wirtschaftlichen Gründen liegt der auf das Gewicht bezogene Anteil des Stickstoffs daher besonders bevorzugt bei 0,050 % oder weniger.

Besonders vorteilhaft ist es dabei, den Stickstoff erst möglichst spät im Verlauf des Herstellungsprozesses dem Stahlflachprodukt hinzuzufügen, um zu verhindern, dass sich nach dem Aufsticken, insbesondere durch Kaltwalzvorgänge entlang einer Walzrichtung unterschiedliche Materialeigenschaften in und quer zur Walzrichtung ausbilden können. Die Aufstickung des erfindungsgemäßen Stahlflachprodukts kann beispielsweise nach dem (primären) Kaltwalzen vor oder während des Glühens in einem Durchlaufglühofen erfolgen.

Dadurch, dass das Aufsticken erst nach dem (primären) Kaltwalzen erfolgt, ist der Stickstoff nicht Teil der Verarbeitungsschritte Warmwalzen und (primäres) Kaltwalzen, welche eine massive Anisotropie der Materialeigenschaften hervorrufen. Eine interstitielle Einlagerung des Stickstoffs im Eisengitter (Ferritgitter) während oder nach dem Rekristallisationsglühen fördert zusätzlich die Homogenität des Verpackungsstahls gemäß der Erfindung. Es besteht dabei insbesondere nicht die Gefahr einer Nitridausscheidung, welche während des Nachwalzens eine Richtungsabhängigkeit der Materialeigenschaften verstärken würde.

Bei zweifach kaltgewalzten Stahlblechen kann wegen der aufgrund der Mischkristallverfestigung durch den interstitiell einlagerten Stickstoff erzielten höheren Grundfestigkeit des Stahls der Nachwalzgrad beim zweiten Kaltwalzen reduziert und die dadurch verursachte Anisotropie minimiert werden. Der Nachwalzgrad bei einem zweiten Kaltwalzen kann damit bevorzugt auf 18 % oder weniger beschränkt werden.

Gegenstand der Erfindung ist daher ein (ein- oder zweifach) kaltgewalztes Stahlflachprodukt für Verpackungen mit einer Dicke von weniger als 0,6 mm, welches aus einem Stahl entlang einer Walzrichtung (0°) kaltgewalzt worden ist und folgende Zusammensetzung in Bezug auf das Gewicht aufweist:

- C: 0,02 bis 0,1 %,
- Si: kleiner als 0,03 %,
- Mn: 0,17 bis 0,5 %,

- P: kleiner als 0,03 %,
- S: 0,001 bis 0,03 %,
- Al: 0,002 bis 0,1 %,
- N: 0,014 bis 0,12 %, bevorzugt weniger als 0,07 %,
- optional Cr: kleiner als 0,1 %, bevorzugt 0,01 bis 0,08 %,
- optional Ni: kleiner als 0,1 %bevorzugt 0,01 bis 0,05 %,
- optional Cu: kleiner als 0,1 %, bevorzugt 0,002 bis 0,05 %,
- optional Ti: kleiner als 0,01 %,
- optional B: kleiner als 0,005 %,
- optional Nb: kleiner als 0,01 %,
- optional Mo: kleiner als 0,02 %,
- optional Sn: kleiner als 0,03 %,
- Rest Eisen und unvermeidbare Verunreinigungen,

wobei das Stahlflachprodukt in einem gealterten Zustand eine 0,5%-Dehngrenze (Rp0,5) von mindestens 450 MPa und eine Bruchdehnung (A) von mindestens 5% aufweist und das durch das Produkt aus Bruchdehnung (A) und 0,5%-Dehngrenze (Rp 0,5) definierte Arbeitsvermögen $W(\alpha)$ in Abhängigkeit des Winkels ($\alpha$) zur Walzrichtung (0°) nicht weniger als 60 % und nicht mehr als 140 % des Arbeitsvermögens in Walzrichtung W(0°) beträgt.

Von dem im Stahlflachprodukt enthaltenen Stickstoff ist dabei mindestens ein Gewichtsanteil von 0,010 % in ungebundener Form interstitiell im Stahl eingelagert.

Das Stahlflachprodukt gemäß der Erfindung zeichnet sich durch eine hohe 0,5%-Dehngrenze (Rp0,5) von mindestens 450 MPa und eine gute Bruchdehnung (A) von mindestens 5% in Walzrichtung (0°) sowie durch eine homogene und nur geringfügige Richtungsabhängigkeit des Arbeitsvermögens $W(\alpha)$ in der vom Winkel $\alpha$ aufgespannten Ebene des Stahlflachprodukts aus. Das (aufgrund der Walzvorgänge entlang der Walzrichtung immer noch richtungs-abhängige) Arbeitsvermögen $W(\alpha)$ stellt ein geeignetes Maß für die Bewertung der Verwendbarkeit von kaltgewalzten Stahlblechen für die Herstellung von Verpackungen durch Umformungen in Tiefzieh- und Abstreckziehverfahren dar, weil das aus dem Produkt aus der Bruchdehnung (A) und der 0,5%-Dehngrenze (Rp 0,5) berechnete Arbeitsvermögen W sowohl ein Maß für die Festigkeit des Stahlblechs als auch für dessen Umformfähigkeit darstellt. Dabei hat sich aus nachfolgend noch näher erläuterten Gründen die 0,5%-Dehngrenze (Rp0,5) als geeignetes Maß für die Beurteilung der Festigkeit eines gealterten Stahlflachprodukts ergeben.

Bevorzugt liegt die 0,5%-Dehngrenze (Rp0,5) bei dem erfindungsgemäßen Stahlflachprodukt in Abhängigkeit des Winkels ($\alpha$) zur Walzrichtung (0°) in einem Bereich zwischen einer Obergrenze und einer Untergrenze, wobei die Untergrenze bei mindestens 90 % und die Obergrenze bei höchstens 110 % der 0,5%-Dehngrenze in Walzrichtung Rp0,5 (0°) liegt, wobei die 0,5%-Dehngrenze (Rp0,5) in Walzrichtung mindestens 450 MPa beträgt.

Die vom Winkel ($\alpha$) zur Walzrichtung (0°) abhängige Bruchdehnung $A(\alpha)$ liegt bei dem erfindungsgemäßen Stahlflachprodukt bevorzugt ebenfalls zwischen einer Obergrenze und einer Untergrenze, wobei die Untergrenze bei mindestens 60 % und die Obergrenze bei höchstens 140 % der Bruchdehnung in Walzrichtung A(0°) liegt, wobei die Bruchdehnung (A) in Walzrichtung mindestens 5% beträgt.

Das vom Winkel ($\alpha$) zur Walzrichtung (0°) abhängige Arbeitsvermögen $W(\alpha)$ liegt entsprechend besonders bevorzugt zwischen mindestens 70 % und höchstens 130 % des Arbeitsvermögens in Walzrichtung W(0°).

Aufgrund der Diffusion des Stickstoffs in das kaltgewalzte Stahlflachprodukt während des Aufstickens im Glühofen bei den Glühtemperaturen, die bevorzugt bei mehr als 630°C (Temperatur des Stahlflachprodukts) liegen um eine vollständige Rekristallisation sicher zu stellen, erfolgt eine gleichmäßige Verteilung und Einlagerung des eindiffundierten Stickstoffs im Gitter des Stahls. Durch die gleichmäßige Verteilung des interstitiell eingelagerten Stickstoffs ergibt sich eine hohe Isotropie der durch das Aufsticken beeinflussten mechanischen Eigenschaften des aufgestickten Stahlflachprodukts, insbesondere bezüglich der Bruchdehnung und der Dehngrenze und damit in Bezug auf das für Tiefziehanwendungen als Qualitätsmaß relevante Arbeitsvermögen als Produkt der 0,5%-Dehngrenze (Rp 0,5) und der Bruchdehnung (A). Eine möglichst homogene Verteilung des im Glühofen eingelagerten Stickstoffs ergibt sich dabei mit längeren Verweilzeiten des Stahlflachprodukts im Glühofen und insbesondere bei längeren Glühzeiten für das Rekristallisationsglühen. Bevorzugt liegen die Verweilzeiten des Stahlflachprodukts im Glühofen bei mehr als 10 Sekunden, besonders bevorzugt mehr als 30 Sekunden und insbesondere im Bereich von 100 bis 250 Sekunden. Bei Verweilzeiten von mehr als 400 Sekunden wäre in einem Durchlaufglühofen bei einer typischen Länge der Durchlaufstrecke die Durchlaufgeschwindigkeit des bandförmigen Stahlflachprodukts so niedrig zu wählen, dass die Effizienz des Verfahrens aus wirtschaftlichen Gründen nicht mehr darstellbar ist, weshalb längere Glühzeiten als 400 Sekunden allenfalls in einem Haubenglühverfahren eingestellt werden können.

Die beim erfindungsgemäßen Stahlflachprodukt durch das Aufsticken nach dem Kaltwalzen erzielte Isotropie der für Kaltumformungen relevanten Materialeigenschaften wie die 0,5%-Dehngrenze (Rp0,5), die Bruchdehnung (A) und das Arbeitsvermögen (W), kann trotz einer durch das (ein- oder zweifache) Kaltwalzen nicht vermeidbaren Kornstreckung der Stahlkörner erreicht werden. Die Körner des Stahlgefüges weisen bei dem erfindungsgemäßen Stahlflachprodukt typischerweise eine mittlere Sehnenlänge von 3,0 bis 6,0 µm sowie eine richtungsabhängige Kornstreckung (S) auf, welche bspw. in Walzrichtung (0°) in Längsschnitten des Stahlflachprodukts bei mindestens 1,4 und in Planarschnitten des Stahlflachprodukts bei mindestens 1,1 liegt. Daraus ergibt sich also, dass beim erfindungsgemäßen Stahlflachprodukt trotz einer fertigungsbedingt vorhandenen Kornstreckung isotrope Eigenschaften bezüglich der Dehngrenze, der Bruchdehnung und des daraus resultierenden Arbeitsvermögens in der Blechebene erzielt werden können.

Die Kornstreckung (S) der Körner des Stahlgefüges ist dabei als das Verhältnis der mittleren horizontalen Sehnenlänge (S_H) und der mittleren vertikalen Sehnenlänge (S_V) definiert. Quer zur Walzrichtung ($\alpha$ = 90°) liegt die vom Winkel $\alpha$ abhängige Kornstreckung (S) bei den erfindungsgemäßen Stahlflachprodukten regelmäßig bei mindestens 1,2.

Da die durch das Aufsticken des Stahlflachprodukts erzeugte Mischkristallverfestigung am effizientesten ist, wenn der eingebrachte Stickstoff interstitiell in Zwischengitterplätzen des Stahls (insbesondere des Ferritgitters) eingelagert wird, ist es zweckmäßig wenn die Legierungskomposition des Stahls möglichst wenig starke Nitridbildner wie Al, Ti, B, und/oder Nb aufweist, um zu verhindern, dass der Stickstoff in Form von Nitriden gebunden wird. Daher weist die Legierungskomposition des Stahls bevorzugt folgende Obergrenzen für den Gewichtsanteil dieser stark nitridbildenden Legierungsbestandteile auf:

- Al: < 0,1 %, bevorzugt weniger als 0,05%;
- Ti: < 0,01 %, bevorzugt weniger als 0,002%;
- B: < 0,005 %, bevorzugt weniger als 0,001%;
- Nb: < 0,01 %, bevorzugt weniger als 0,002%;

Bevorzugt beträgt der gesamte Gewichtsanteil der Nitridbildner weniger als 0,1 %. Dadurch kann insbesondere ein Gewichtsanteil des ungebundenen Stickstoffs von mehr 0,01 % gewährleistet werden.

Der Gewichtsanteil des ungebunden Stickstoffs im Warmband $N_{frei}$ (Warmband) kann dabei über folgende *Formel 1* beschrieben werden, wobei angenommen wird, dass die ggf. innerhalb obiger Grenzen im Stahl vorhanden Nitridbildnder Al, Ti, B, und Nb vollständig mit Stickstoff zu Nitriden abgebunden werden:

$$N_{frei} \text{ (Warmband)} = \tfrac{1}{2} (N_0 - Ti / 3,4 - B / 0,8 - Nb / 6,6 - Al\text{-Faktor} + | N_0 - Ti / 3,4 - B / 0,8 - Nb / 6,6 - Al\text{-Faktor} |) \qquad \text{(Formel 1)},$$

wobei $N_0$ der Gewichtsanteil des Stickstoffs in der Schmelze des Stahls ist, der Al-Faktor in Abhängigkeit der Haspeltemperatur HT (Aufwickeltemperatur des Warmbands) und des Aluminiumgehalts Al (in Gew.%) wie folgt definiert ist:

- wenn HT < 640 °C: Al-Faktor = 0;
- wenn 750 $\geq$ HT $\geq$ 640 °C: Al-Faktor = $N_0 - N_0$ x (-0,682 HT + 536) / 100 = $N_0$ x (1 - (-0,682 HT + 536)/100);

und der Summand

$$| N_0 - Ti / 3,4 - B / 0,8 - Nb / 6,6 - Al\text{-Faktor} |$$

als der Betrag der Differenz "$N_0$ - Ti / 3,4 - B / 0,8 - Nb / 6,6 - Al-Faktor" definiert ist. In Formel 1 wird durch diesen Betrags-Summanden berücksichtigt, dass maximal nur der gesamte im Warmband (d.h. in der Stahlschmelze) tatsächlich vorhandene Stickstoff durch die im Warmband (d.h. in der Stahlschmelze) vorhandenen Nitridbildner abgebunden werden kann.

Der gesamte Gewichtsanteil des freien Stickstoffs im kaltgewalzten Stahlflachprodukt ergibt sich aus der Summe des freien Stickstoffgehalts im Warmband ($N_{frei}$ (Warmband) gemäß obiger Formel 1) und des durch die Aufstickung im Durchlaufglühofen hinzugefügten Stickstoffs $\Delta N$:

$$N_{frei} = N_{frei} \text{ (Warmband)} + \Delta N \qquad \text{(Formel 2)}$$

Dabei wird davon ausgegangen, dass der beim Aufsticken im Durchlaufglühofen eingebrachte Stickstoffanteil $\Delta N$ zumindest im Wesentlichen interstitiell in Zwischengitterplätze eingelagert wird. Die Obergrenze für den Gewichtsanteil des freien Stickstoffs im kaltgewalzten Stahlflachprodukt wird dabei durch die Löslichkeitsgrenze von Stickstoff im Ferritgitter des Stahls bestimmt, die bei ca. 0,1 Gew.% liegt.

Der gesamte Gewichtsanteil des freien Stickstoffs im kaltgewalzten Stahlflachprodukt ($N_{frei}$) liegt bevorzugt bei mehr als 0,01 %. Um einen möglichst hohen Anteil des Stickstoffs in ungebundener Form in das kaltgewalzte Stahlflachprodukt einzubringen, wird bevorzugt der Großteil des gesamten Gewichtsanteils des Stickstoffs durch das Aufsticken im Durchlaufglühofen eingebracht, wobei der Gewichtsanteil von $\Delta N$ bevorzugt bei mindestens 0,002 Gew. % und besonders bevorzugt bei mehr als 0,008 Gew. % liegt.

Das erfindungsgemäße Stahlflachprodukt ist durch ein Herstellungsverfahren erhältlich, in dem zunächst aus einer Bramme, welche aus der oben angeführten Stahlschmelze gefertigt worden ist, durch Warmwalzen bei einer bevorzugten Endwalztemperatur von > Ar3 und insbesondere zwischen 800°C und 900°C ein Warmband erzeugt wird, welches bei einer Aufwickeltemperatur (Haspeltemperatur HT) von < Ar1 und insbesondere im Bereich von 500°C bis 750°C aufgewickelt und nach Abkühlung bei einem Reduktionsverhältnis von mindestens 80 % zu einem Stahlflachprodukt (Stahlband) kaltgewalzt und anschließend in einem Glühofen, insbesondere einem Durchlaufglühofen, bei einer Glühtemperatur von mindestens 630°C unter zumindest zeitweiser Anwesenheit eines Stickstoffdonors rekristallisierend geglüht und danach auf Raumtemperatur abgekühlt und abschließend mit einem Nachwalzgrad von 0,2 % bis 45% nachgewalzt bzw. dressiert wird. Bevorzugt liegen die Nachwalzgrade bei weniger als 18 %, um die isotropen Eigenschaften nicht durch das Nachwalzen zu verschlechtern.

Das Aufsticken des Stahlflachprodukts im Durchlaufglühofen kann dabei vor, während oder nach dem rekristallisierenden Glühen erfolgen. So ist es bspw. möglich, das Aufsticken in dem Durchlaufglühofen in einer stromaufwärtigen ersten Zone des Durchlaufglühofens bei einer ersten Temperatur unterhalb der Rekristallisationstemperatur unter Anwesenheit eines Stickstoffdonors durchzuführen und das Stahlflachprodukt danach in einer stromabwärtigen zweiten Zone des Durchlaufglühofens zum rekristallisierenden Glühen auf eine zweite Temperatur oberhalb der Rekristallisationstemperatur zu erwärmen. Diese Reihenfolge des Aufstickens und rekristallisierenden Glühens kann auch umgekehrt werden. Eine solche Entkopplung des Aufstickens und des rekristallisierenden Glühens in verschiedenen Zonen des Durchlaufglühofens hat den Vorteil, dass für den jeweiligen Prozess die optimale Temperatur eingestellt werden kann, wobei die optimale Temperatur für das Aufsticken niedriger liegt als für das rekristallisierende Glühen. Aus ökonomischen Gründen ist jedoch ein gleichzeitiges Aufsticken und Glühen des Stahlflachprodukts im Durchlaufglühofen bei einer Temperatur oberhalb der Rekristallisationstemperatur unter Anwesenheit eines Stickstoffdonors zu bevorzugen.

Die Eigenschaften des so hergestellten Stahlflachprodukts stellen sich dabei nach einer Alterung des nachgewalzten Stahlbands ein, wobei die Alterung entweder künstlich durch Erwärmung auf 200°C über 20 Minuten oder durch eine Lackierung mit anschließender Lacktrocknung des Stahlflachprodukts herbeigeführt werden kann.

Bevorzugt weist das Warmband bereits einen anfänglichen Stickstoffanteil $N_0$ im Bereich von 0,001 Gew.% bis 0,016 Gew.% auf, um den gesamten Stickstoffgehalt im kaltgewalzten Stahlflachprodukt und dadurch die durch das Aufsticken des Kaltbands bewirkte Mischkristallverfestigung zu maximieren. Um die Ausbildung von Brammenrissen beim Gießen der Bramme und beim Warmwalzen zu verhindern und um nicht bereits die Festigkeit des Warmbands soweit zu erhöhen, dass es mit den üblichen Kaltwalzvorrichtungen nicht mehr kaltwalzbar ist, sollte der Gewichtsanteil des Stickstoffs in der Stahlschmelze, aus der das Warmband hergestellt wird, 0,016 % nicht überschreiten. Der gesamte Stickstoffgehalt des erfindungsgemäßen Stahlflachprodukts, der sich aus der Summe des anfänglichen Stickstoffanteil $N_0$ und dem beim Aufsticken im Glühofen eingebrachten Stickstoffanteil $\Delta N$ zusammensetzt, wird beim Glühen des kaltgewalzten Stahlflachprodukts durch die Anwesenheit des Stickstoffdonors in dem Glühofen eingestellt, indem bei den Glühtemperaturen dissoziierter, atomarer Stickstoff des Stickstoffdonors in das kaltgewalzte Stahlflachprodukt diffundiert und dadurch den Stickstoffanteil um $\Delta N$ erhöht. Der beim Aufsticken im Glühofen eingebrachte Stickstoffanteil $\Delta N$ liegt dabei bevorzugt bei mindestens 0,002 Gew. %, wobei dadurch der gesamte Stickstoffanteil des Stahlflachprodukts auf mehr als 0,014 Gew.% erhöht wird, wenn der anfängliche Stickstoffanteil $N_0$ in der Stahlschmelze niedriger als dieser Wert war. Besonders bevorzugt wird das kaltgewalzte Stahlflachprodukt im Durchlaufglühofen auf mehr als 0,020 Gew.% Stickstoffanteil aufgestickt. Der gesamte Stickstoffgehalt des im Durchlaufglühofen aufgestickten Stahlflachprodukts kann (zumindest theoretisch) bis zur Löslichkeitsgrenze des Stickstoffs im (Ferrit-)Gitter des Stahls von ca. 0,1 Gew. % reichen.

Bei dem Stickstoffdonor kann es sich bspw. um eine stickstoffhaltige Gasatmosphäre im Glühofen, insbesondere um eine ammoniakhaltige Atmosphäre, oder um eine stickstoffhaltige Flüssigkeit handeln, die auf die Oberfläche des kaltgewalzten Stahlflachprodukts aufgebracht wird, bevor dieses in dem Glühofen erwärmt wird. Der Stickstoffdonor sollte dabei so ausgebildet sein, dass durch Dissoziation atomarer Stickstoff im Glühofen bereitgestellt wird, der in das Stahlflachprodukt diffundieren kann. Insbesondere kann es sich bei dem Stickstoffdonor um Ammoniakgas handeln. Damit dieses im Glühofen zur Bildung von atomarem Stickstoff dissoziiert, werden im Glühofen beim Aufsticken des kaltgewalzten Stahlflachprodukts bevorzugt Ofen-Temperaturen von mehr als 400°C eingestellt.

Aufgrund der durch eine Mischkristallverfestigung herbeigeführten Festigkeitssteigerung durch das Aufsticken des Stahlflachprodukts beim Glühen in dem (Durchlauf-)glühofen in Anwesenheit des Stickstoffdonors ist bei dem erfindungsgemäßen Stahlflachprodukt kein Nachwalzen mit einem hohen Nachwalzgrad erforderlich, um zusätzlich die Festigkeit noch durch eine Kaltverfestigung zu steigern. Der Nachwalzgrad kann daher bevorzugt auf maximal 18% beschränkt werden, wodurch eine Verschlechterung der Isotropie der Materialeigenschaften durch ein zweites Kaltwalzen mit hohen Nachwalzgraden vermieden werden kann.

Nach dem zweiten Kaltwalzen bzw. Dressieren kann zur Verbesserung der Korrosionsbeständigkeit auf die Oberfläche des Stahlflachprodukts eine Beschichtung aufgebracht werden, bspw. durch elektrolytische Abscheidung einer Zinn- oder Chrom-/Chromoxid-Beschichtung und/oder durch Lackierung mit einem Lack oder durch Auflaminieren einer Polymerfolie aus einem thermoplastischen Kunststoff, insbesondere einer Folie aus einem Polyester wie PET oder einem Polyolefin wie PP oder PE.

Die hervorragenden isotropen mechanischen Eigenschaften der erfindungsgemäßen Stahlbleche ermöglichen die Herstellung von Aufreißdeckeln von Dosen ("easy-open-ends" EOE) oder von Aerosoldosen bzw. Aerosoldosen-Komponenten, wie z.B. Aerosoldosen-Böden oder -Deckel, mit isotropen Eigenschaften über die gesamte Fläche der Aufreißdeckel bzw. der Aerosoldosen und deren -Komponenten. Insbesondere bei runden oder ovalen Aufreißdeckeln sowie runden Aerosoldosen-Böden oder -Deckel erweisen sich die isotropen Eigenschaften der erfindungsgemäßen Stahlbleche als vorteilhaft, da über den gesamten Umfang des jeweiligen Produkts nahezu gleichbleibende mechanische Eigenschaften vorhanden sind. Auch bei Tiefziehanwendungen, in denen ein rundes Blechteil (Ronde) umgeformt wird, um bspw. einen Dosenrumpf für eine zweiteilige Dose zu erzeugen, erweisen sich die isotropen mechanischen Eigenschaften der erfindungsgemäßen Stahlbleche als vorteilhaft, da auch hier gleichbleibende mechanische Eigenschaften des umgeformten Blechteils um dessen Umfang erzielt werden können und beim Umformen keine ausgedünnten Stellen mit geringerer Blechdicke entstehen.

Diese und weitere Eigenschaften, Merkmale und Vorteile des erfindungsgemäßen Stahlflachprodukts ergeben sich aus den nachfolgend unter Bezugnahme auf die begleitenden Zeichnungen und Tabellen näher beschriebenen Ausführungsbeispielen. Die Zeichnungen zeigen:

**Fig. 1:**  Beispiel für ein schematisches Spannungs-Dehnungs-Diagramm, das in einem Zugversuch an einem erfindungsgemäßen Stahlflachprodukt erhalten wurde;

**Fig. 2**  Kreisdiagramme der Winkelabhängigkeit der Bruchdehnung (A) in der Ebene von in Zugversuchen untersuchten Stahlflachprodukten, wobei Figur 2a die Ergebnisse der untersuchten Proben 1 bis 13 und Figur 2b die Ergebnisse der untersuchten Proben 14 bis 26 zeigt;

**Fig. 3**  Kreisdiagramme der Winkelabhängigkeit der 0,5%-Dehngrenze (Rp0,5) in der Ebene von in Zugversuchen untersuchten Stahlflachprodukten, wobei Figur 3a die Ergebnisse der untersuchten Proben 1 bis 13 und Figur 3b die Ergebnisse der untersuchten Proben 14 bis 26 zeigt;

**Fig. 4**  Kreisdiagramme der Winkelabhängigkeit des Arbeitsvermögens W = A· Rp0,5 in der Ebene von in Zugversuchen untersuchten Stahlflachprodukten, wobei Figur 4a die Ergebnisse der untersuchten Proben 1 bis 13 und Figur 4b die Ergebnisse der untersuchten Proben 14 bis 26 zeigt;

**Fig. 5**  schematische Darstellung der Untersuchungen zur Erfassung der Kornstruktur der untersuchten Stahlflachprodukte;

**Fig. 6**  Darstellung des Einflusses der Alterung kaltgewalzter Stahlflachprodukte auf die Isotropie der Bruchdehnung.

Für die Herstellung erfindungsgemäßer Stahlflachprodukte wird aus einer Stahlschmelze eine Bramme gegossen und zu einem Warmband warmgewalzt. Die Legierungszusammensetzung der Stahlschmelze orientiert sich dabei zweckmäßig an den durch Normen für Verpackungsstahl vorgegebenen Grenzwerten (wie z.B. in der Norm ASTM A623-11 "Standard Specification for Tin Mill Products" oder im "European Standard EN 10202" definiert). Im Folgenden werden die Bestandteile des Stahls, aus dem erfindungsgemäße Stahlflachprodukte hergestellt werden können, im Einzelnen erläutert:

Zusammensetzung des Stahls:

• Kohlenstoff, C: mindestens 0,02 % und höchstens 0,1 %, bevorzugt weniger als 0,085 %;

Kohlenstoff wirkt härte- bzw. festigkeitssteigernd. Daher enthält der Stahl mindestens 0,02 Gew.% Kohlenstoff. Um die Walzbarkeit des Stahlflachprodukts beim primären Kaltwalzen und ggf. in einem zweiten Kaltwalzschritt (Nachwalzen oder Dressieren) zu gewährleisten und die Bruchdehnung nicht zu senken, sollte der Kohlenstoffgehalt nicht zu hoch sein. Mit zunehmendem Kohlenstoffgehalt entsteht ferner während der Herstellung und der Verarbeitung des Stahlflachprodukts eine ausgeprägte Anisotropie in Form einer Zeiligkeit, da der Kohlenstoff aufgrund der niedrigen Löslichkeit im Ferritgitter des Stahls maßgeblich in Form von Zementit vorliegt. Darüber hinaus verschlechtert sich mit zunehmendem Kohlenstoffgehalt die Oberflächenqualität und die Gefahr von Brammenrissen steigt mit Annäherung an den peritektischen Punkt. Deshalb ist eine Begrenzung des Kohlenstoffgehalts auf maximal 0,1 Gew. % notwendig, da nur so effektiv die Bildung von Brammenrissen und die daraus resultierende punktförmige Oxidation (Diffusion von Sauerstoff in Risse) vermieden werden können.

• Mangan, Mn: mindestens 0,17 % und höchstens 0,5 %;

Mangan wirkt ebenfalls härte- bzw. festigkeitssteigernd. Außerdem verbessert Mangan die Schweißbarkeit und den Verschleißwiderstand von Stahl. Ferner wird durch Zugabe von Mangan die Rotbruch-Neigung beim Warmwalzen gemindert, indem Schwefel zu weniger schädlichem MnS abgebunden wird. Weiterhin führt Mangan zu einer Kornfeinung und durch Mangan kann die Löslichkeit von Stickstoff im Eisengitter erhöht und eine Diffusion von Kohlenstoff an die Oberfläche der Bramme verhindert werden. Daher ist ein Mangangehalt von wenigstens 0,17 Gew.% notwendig. Zur Erzielung hoher Festigkeiten ist ein Mangangehalt von mehr als 0,2 Gew.%, insbesondere von 0,30 Gew.% oder mehr zu bevorzugen. Wenn der Mangangehalt jedoch zu hoch wird geht dies zu Lasten der Korrosionsbeständigkeit des Stahls und die Lebensmittelverträglichkeit ist nicht mehr gewährleistet. Außerdem wird bei zu hohen Mangangehalten die Festigkeit des Warmbands zu hoch, was dazu führt, dass das Warmband nicht mehr kaltwalzbar ist. Daher ist die Obergrenze für den Mangangehalt bei 0,5 Gew.%.

• Phosphor, P: weniger als 0,03 %

Phosphor ist ein unerwünschtes Begleitelement in Stählen. Ein hoher Phosphorgehalt führt insbesondere zu einer Versprödung des Stahls und verschlechtert daher die Umformfähigkeit von Stahlflachprodukten, weshalb die Obergrenze für den Phosphorgehalt bei 0,03 Gew. % liegt.

• Schwefel, S: mehr als 0,001 % und höchstens 0,03 %

Schwefel ist ein unerwünschtes Begleitelement, das die Dehnbarkeit und die Korrosionsbeständigkeit verschlechtert. Daher darf nicht mehr als 0,03 Gew.% Schwefel im Stahl enthalten sein. Andererseits müssen für eine Entschwefelung von Stahl aufwändige und kostenintensive Maßnahmen ergriffen werden, weshalb aus wirtschaftlichen Gesichtspunkten ein Schwefelgehalt von weniger als 0,001 Gew.% nicht mehr vertretbar ist. Der Schwefelgehalt liegt daher im Bereich von 0,001 Gew.% bis 0,03 Gew.%, besonders bevorzugt zwischen 0,005 Gew.% und 0,01 Gew.%.

• Aluminium, Al: mehr als 0,002 % und weniger als 0,1 %

Aluminium wird bei der Stahlherstellung als Desoxidationsmittel zur Stahlberuhigung benötigt. Aluminium erhöht weiterhin die Zunderbeständigkeit und die Umformfähigkeit. Deshalb liegt der Aluminiumgehalt bei mehr als 0,002 Gew.%. Allerdings bildet Aluminium mit Stickstoff Aluminiumnitride, welche in den erfindungsgemäßen Stahlflachprodukten nachteilig sind, da sie den Anteil des freien Stickstoffs reduzieren. Außerdem können zu hohe Aluminiumkonzentrationen zu Oberflächendefekten in Form von Aluminiumclustern führen. Deshalb wird Aluminium in einer Konzentration von maximal 0,1 Gew.% eingesetzt.

• Silizium, Si: weniger als 0,03 %;

Silizium erhöht im Stahl die Zunderbeständigkeit und ist ein Mischkristallhärter. Bei der Stahlherstellung dient Si als Desoxidationsmittel. Ein weiterer positiver Einfluss von Silizium auf Stahl ist, dass es die Zugfestigkeit und die Streckgrenze erhöht. Daher ist ein Siliziumgehalt von 0,003 Gew.% oder mehr zu bevorzugen. Wenn der Siliziumgehalt jedoch zu hoch wird und insbesondere 0,03 Gew.% übersteigt, kann die Korrosionsbeständigkeit des Stahls verschlechtert werden und Oberflächenbehandlungen, insbesondere durch elektrolytische Beschichtungen, können erschwert werden.

• optional Stickstoff, $N_0$: weniger als 0,016 %, und bevorzugt mehr als 0,001 %

Stickstoff ist ein optionaler Bestandteil in der Stahlschmelze, aus dem der Stahl für die erfindungsgemäßen Stahlflachprodukte hergestellt wird. Zwar wirkt Stickstoff als Mischkristallverfestiger härte- und festigkeitssteigernd. Allerdings führt ein zu hoher Stickstoffgehalt in der Stahlschmelze von mehr als 0,016 Gew.% dazu, dass das aus der Stahlschmelze hergestellte Warmband schwieriger kaltwalzbar ist. Weiterhin erhöht ein hoher Stickstoffgehalt in der Stahlschmelze die Gefahr von Defekten im Warmband, da bei Stickstofkonzentrationen von 0,016 Gew.% oder mehr die Warmumformfähigkeit geringer wird. Gemäß der Erfindung ist vorgesehen, den Stickstoffgehalt des Stahlflachprodukts nachträglich durch Aufsticken des kaltgewalzten Stahlflachprodukts in einem Glühofen zu erhöhen. Deshalb kann auf das Einbringen von Stickstoff in die Stahlschmelze auch gänzlich verzichtet werden. Zur Erzielung einer hohen Mischkristallverfestigung ist es jedoch zu bevorzugen, wenn bereits in der Stahlschmelze ein anfänglicher Stickstoffgehalt von mehr als 0,001 Gew. %, besonders bevorzugt von 0,010 Gew. % oder mehr enthalten ist.

Zur Einbringung eines anfänglichen Stickstoffgehalts $N_0$ in das Stahlflachprodukt vor dem Aufsticken im Glühofen kann der Stahlschmelze Stickstoff in entsprechender Menge zugegeben werden, bspw. durch Einblasen von Stickstoffgas und/oder durch Zugabe einer festen Stickstoffverbindung wie Kalk-Stickstoff (Calcium Cyanamid) oder Mangannitrid.

• optional: Nitridbildner, insbesondere Niob, Titan, Bor, Molybdän, Chrom:

Nitridbildende Elemente wie Aluminium, Titan, Niob, Bor, Molybdän und Chrom sind im Stahl der erfindungsgemäßen Stahlflachprodukte von Nachteil, weil sie durch Nitridbildung den Anteil des freien Stickstoffs reduzieren. Außerdem sind diese Elemente teuer und erhöhen daher die Herstellkosten. Andererseits wirken bspw. die Elemente Niob, Titan und Bor über eine Kornfeinung als Mikrolegierungsbestandteile festigkeitssteigernd, ohne die Zähigkeit herabzusetzen. Deshalb können die genannten Nitridbildner vorteilhaft in gewissen Grenzen als Legierungsbestandteile der Stahlschmelze hinzugegeben werden. Der Stahl kann daher (optional) bezogen auf das Gewicht folgende nitridbildende Legierungsbestandteile enthalten:

- Titan, Ti: bevorzugt mehr als 0,002 %, aber aus Kostengründen weniger als 0,01 %,
- Bor, B: bevorzugt mehr als 0,001 %, aber aus Kostengründen weniger als 0,005 %, und/oder
- Niob, Nb: bevorzugt mehr als 0,001 %, aber aus Kostengründen weniger als 0,01 %, und/oder
- Chrom, Cr: bevorzugt mehr als 0,01 % um den Einsatz von Schrott bei der Herstellung der Stahlschmelze zu ermöglichen und die Diffusion von Kohlenstoff an der Oberfläche der Bramme zu erschweren, aber zur Vermeidung von Karbiden und Nitriden höchstens 0,08 %, und/oder
- Molybdän, Mo: weniger als 0,02 %, um eine zu starke Erhöhung der Rekristallisationstemperatur zu vermeiden;

Zur Vermeidung einer Herabsetzung des Anteils des freien, ungebundenen Stickstoffs $N_{frei}$ durch Nitridbildung ist der gesamte Gewichtsanteil der genannten Nitridbildner in der Stahlschmelze bevorzugt geringer als 0,1 %.

Weitere optionale Komponenten:

Neben dem Reststoff Eisen (Fe) und unvermeidlichen Verunreinigungen kann die Stahlschmelze noch weitere optionale Bestanteile enthalten, wie z.B.

- optional Kupfer, Cu: mehr als 0,002, um den Einsatz von Schrott bei der Herstellung der Stahlschmelze zu ermöglichen , aber weniger als 0,1 % um die Lebensmittelverträglichkeit zu gewährleisten;

- optional Nickel, Ni: mehr als 0,01, um den Einsatz von Schrott bei der Herstellung der Stahlschmelze zu ermöglichen und die Zähigkeit zu verbessern, aber weniger als 0,1 % um die Lebensmittelverträglichkeit zu gewährleisten;

- optional Zinn, Sn: bevorzugt weniger als 0,03 %;

Herstellungsverfahren des Stahlflachprodukts:

Mit der beschriebenen Zusammensetzung des Stahls wird eine Stahlschmelze erzeugt, welche zunächst stranggegossen und nach Abkühlung in Brammen zerteilt wird. Die Brammen werden anschließend wieder auf Vorwärmtemperaturen von mehr als 1100°C, insbesondere von 1200°C erwärmt und zur Erzeugung eines Warmbands mit einer Dicke im Bereich von 1 bis 4mm warmgewalzt.

Die Endwalztemperatur beim Warmwalzen liegt bevorzugt oberhalb der Ar3-Temperatur, um austenitisch zu bleiben, und liegt insbesondere zwischen 800°C und 900°C.

Das Warmband wird bei einer vorgegebenen und zweckmäßig konstanten Aufwickeltemperatur (Haspeltemperatur, HT) zu einer Rolle (Coil) aufgewickelt. Die Aufwickeltemperatur liegt dabei bevorzugt unterhalb Ar1, um im ferritischen Gebiet zu bleiben, bevorzugt im Bereich von 500°C bis 7500°C, und besonders bevorzugt bei weniger als 640°C, um das Ausfällen von AlN zu vermeiden. Aus wirtschaftlichen Gründen sollte die Aufwickeltemperatur bei mehr als 500°C liegen. Eine Ausbildung von Eisennitriden an der Oberfläche des Warmbands kann durch eine Abkühlung des Warmbands nach Beendigung des Warmwalzens bis zum Aufwickeln bei höheren Abkühlraten vermieden werden.

Zur Herstellung eines Verpackungsstahls in Form eines dünnen Stahlflachprodukts im Dickenbereich von weniger als 0,6 mm (Feinstblechdicken) und bevorzugt mit einer Dicke von weniger als 0,4 mm wird das Warmband kaltgewalzt, wobei zweckmäßig eine Dickenreduktion (Reduktionsgrad bzw. Kaltwalzgrad) von mindestens 80% und bevorzugt im Bereich von 85% bis 98% erfolgt. Zur Wiederherstellung des beim Kaltwalzen zerstörten Kristallgefüges des Stahls wird das kaltgewalzte Stahlband anschließend rekristallisierend in einem Glühofen geglüht. Dies erfolgt bspw. durch Durchleiten des in Form eines kaltgewalzten Stahlbands vorliegenden Stahlflachprodukts durch einen Durchlaufglühofen, in dem das Stahlband auf Temperaturen oberhalb der Rekristallisationstemperatur des Stahls erhitzt wird. Dabei erfolgt vor oder bevorzugt gleichzeitig mit dem Rekristallisationsglühen ein Aufsticken des kaltgewalzten Stahlflachprodukts durch ein Erwärmen des Stahlflachprodukts im Glühofen in Anwesenheit eines Stickstoffdonors. Das Aufsticken wird dabei bevorzugt gleichzeitig mit dem Rekristallisationsglühen in dem Glühofen durchgeführt, indem in den Glühofen ein Stickstoffdonor, insbesondere in Form eines stickstoffhaltigen Gases, bevorzugt Ammoniak ($NH_3$), eingebracht und das Stahlflachprodukt auf eine Glühtemperatur oberhalb der Rekristallisationstemperatur des Stahls erwärmt und für eine Glühdauer (Haltezeit) von bevorzugt 10 bis 150 Sekunden auf der Glühtemperatur gehalten wird. Die Glühtemperatur liegt dabei bevorzugt oberhalb von 630°C und insbesondere im Bereich von 650°C bis 750°C. Der Stickstoffdonor wird dabei so ausgewählt, dass sich bei den Temperaturen im Glühofen durch Dissoziation des Stickstoffdonors atomarer Stickstoff bildet, der in das Stahlflachprodukt diffundieren kann. Hierfür hat sich Ammoniak als geeignet erwiesen. Um beim Glühen eine Oxidation der Oberfläche des Stahlflachprodukts zu vermeiden wird zweckmäßig in dem Glühofen eine Schutzgasatmospähre verwendet. Bevorzugt besteht die Atmosphäre in dem Glühofen aus einer Mischung des als Stickstoffdonor wirkenden stickstoffhaltigen Gas und einem Schutzgas wie HNx, wobei der Volumenanteil des Schutzgases bevorzugt zwischen 90% und 99,5% liegt und der Rest des Volumenanteils der Gasatmospähre von dem stickstoffhaltigen Gas, insbesondere Ammoniakgas ($NH_3$-Gas), gebildet wird.

Ausführungsbeispiele:

Nachfolgend werden Ausführungsbeispiele der Erfindung und Vergleichsbeispiele erläutert. Aus Stahlschmelzen mit der in **Tabelle 1** aufgeführten Legierungskompositionen wurden durch Warmwalzen und nachfolgendem Kaltwalzen Stahlflachprodukte (Stahlbleche) hergestellt.

Die kaltgewalzten Stahlflachprodukte wurden anschließend in einem Durchlaufglühofen rekristallisierend geglüht, indem die Stahlflachprodukte während einer Glühdauer von 45 Sekunden auf Glühtemperaturen von 640 °C gehalten wurden.

Die Verfahrens- und Materialparameter der so thermisch behandelten Stahlbleche aus Tabelle 1 sind in **Tabelle 2** angeführt, wobei

- N (nach Aufstickung) der Stickstoffgehalt nach dem Aufsticken im Glühofen,
- D die Dicke des Stahlblechs (in mm),
- NWG der Nachwalzgrad beim sekundären Kaltwalzen (in %),
- NH3 der Ammoniakgehalt im Glühofen (in Vol%),
- Rp0,5 die 0,5%-Dehngrenze (in MPa) in Walzrichtung,
- A die Bruchdehnung (in %) in Walzrichtung und
- Rm die Zugfestigkeit (in MPa) in Walzrichtung ist.

Bei den erfindungsgemäßen Beispielen (Beispiele 1 bis 3, 10 bis 12, 15, 16, 18, 19, 21 bis 23 sowie 25 und 26 der Tabellen 1 und 2) wurde in dem Durchlaufglühofen während der thermischen Behandlung der Stahlflachprodukte Ammoniak eingebracht, so dass in dem Durchlaufglühofen eine Gasatmosphäre bestehend aus Ammoniak und HNx-Schutzgas vorgelegen hat. Der Volumenanteil des Ammoniak in der Gasatmosphäre ist in Tabelle 2 mit NH3 (Vol. %) angegeben. Bei den Vergleichsbeispielen (Beispiele 4 bis 9, 13, 14, 17, 20 und 24 der Tabellen 1 und 2) war im Durchlaufglühofen während des Glühens eine 100% HNx-Schutzgasatmosphäre vorhanden. Der sich bei den erfindungsgemäßen Proben durch das Aufsticken in der ammoniakhaltigen Gasatmosphäre des Durchlaufglühofens ergebende gesamte Stickstoffgehalt ist in Tabelle 2 mit N (nach Aufstickung) [Gew.%] angegeben. Der gesamte Stickstoffgehalt N wurde dabei gem. der Norm DIN EN ISO 14284 (insbesondere Ziffer 4.4.1) nach der Entfernung einer oberflächlichen Eisennitridschicht erfasst, die sich beim Aufsticken an der Oberfläche der Proben gebildet hat.

Der gesamte Gewichtsanteil des Stickstoffs setzt sich dabei zusammen aus dem anfänglichen Stickstoffgehalt der Stahlschmelze (N0, s. Tabelle 1) und dem durch das Aufsticken im Durchlaufglühofen eingebrachte Stickstoffanteil $\Delta N$ zusammen, wobei ein wesentlicher Anteil des gesamten Stickstoffgehalts $N_{frei}$ in ungebundener Form und der Rest in gebundener Form als Nitrid vorliegt, s. Formel (1). Aus dem Gewichtsanteil der im Stahl vorhandenen Nitridbildner lässt sich über Formel (1) der Gewichtsanteil des freien Stickstoffs $N_{frei}$ abschätzen.

Nach der thermischen Behandlung in dem Durchlaufglühofen wurden die kaltgewalzten und rekristallisierend geglühten Stahlflachprodukte einem Nachwalzen bzw. Dressieren unterzogen. Die Nachwalzgrade (NWG) des zweiten Kaltwalzens bzw. des Dressierens sowie die Dicke der nachgewalzten Stahlflachprodukte sind in Tabelle 2 aufgeführt. Abschließend wurde eine künstliche Alterung der Stahlflachprodukte durch Erwärmen der Probe für 20 Minuten auf 200°C erzeugt.

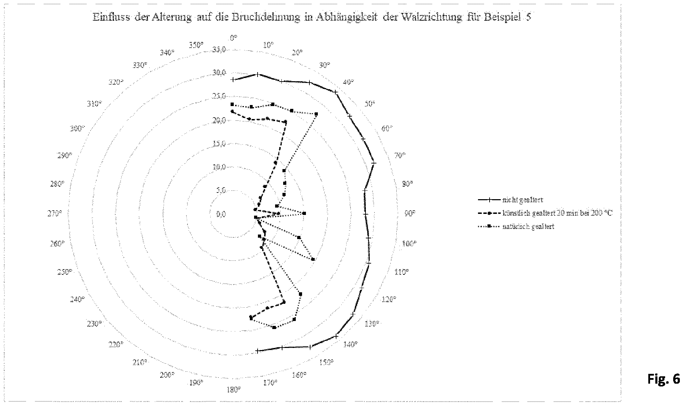

Figur 6 veranschaulicht den Einfluss der Alterung auf die Winkelabhängigkeit der Bruchdehnung für das Vergleichsbeispiel 5 und stellt den ungealterten Zustand dem gealterten Zustand gegenüber, wobei bei letzterem nochmals zwischen einer künstlichen sowie einer natürlichen Alterung differenziert wird. Dabei wird ersichtlich, dass sich erst durch die Alterung eine signifikante Anisotropie ausbildet. Da die Alterung bei der praktischen Verarbeitung von Verpackungsstahl jedoch nahezu unvermeidbar ist, ist wiederum von besonderer Bedeutung die Isotropie im gealterten Zustand zu erfassen und zu optimieren, was Gegenstand der Erfindung ist.

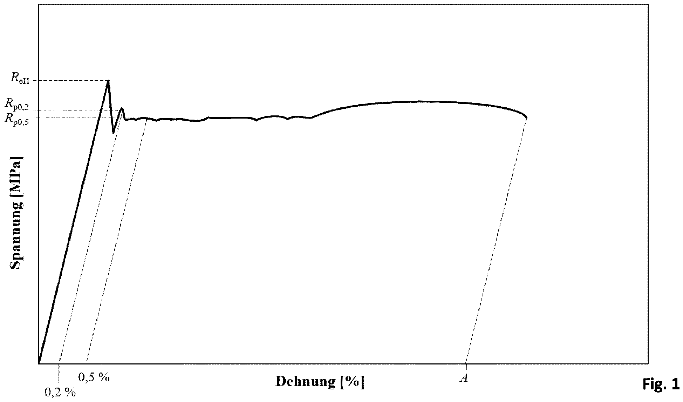

An den gealterten Proben der Beispiele 1 bis 26 wurden Zugversuche und Untersuchungen des Gefüges vorgenommen. Insbesondere wurden in den Zugversuchen die 0,5%-Dehngrenze (Rp0,5, gemessen gem. DIN EN ISO 6892-1) und die Bruchdehnung (A) sowie in den Gefügeuntersuchungen die mittlere Korngröße und die Kornstreckung ermittelt. In Figur 1 ist ein Beispiel eines schematischen Spannungs-Dehnungs-Diagramms aus den Zugversuchen dargestellt.

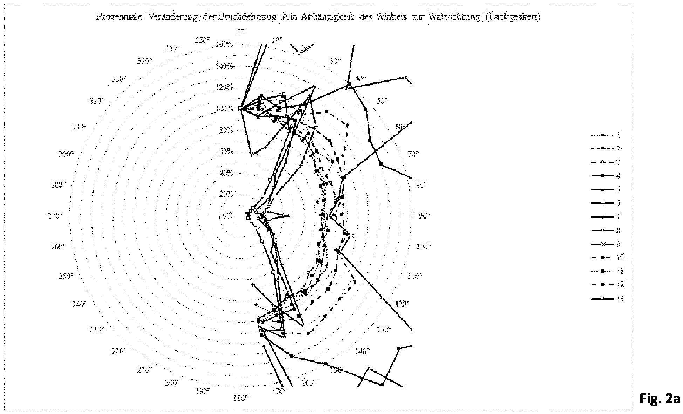

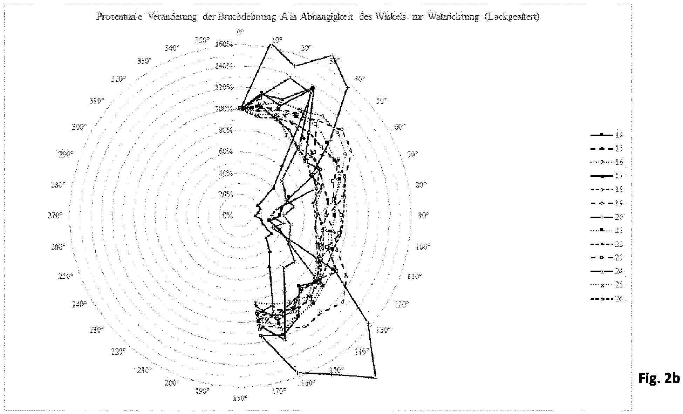

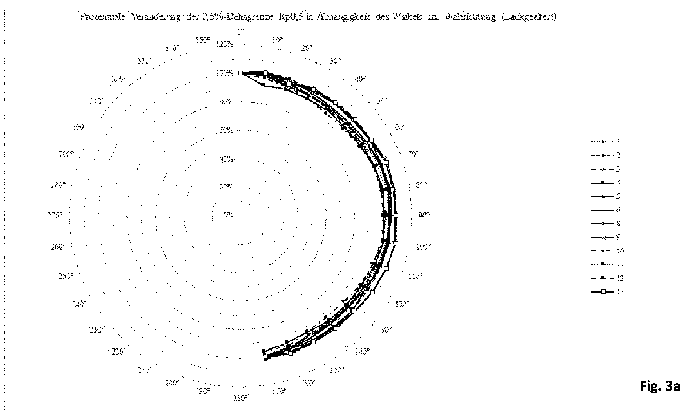

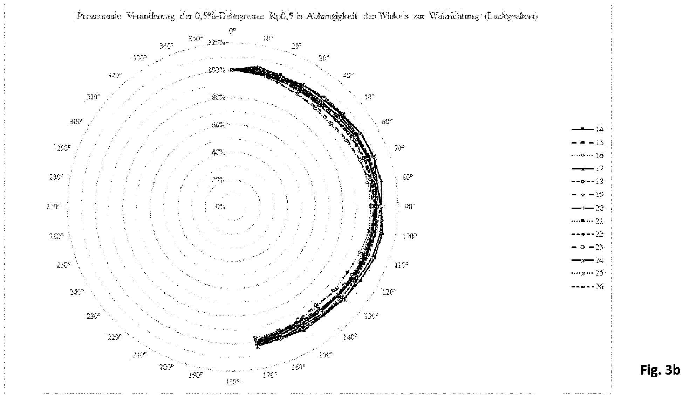

Gealterte Stahlflachprodukte zeigen ein unstetiges Spannungs-Dehnungs-Diagramm.Üblicherweise werden die obere oder untere Streckgrenze als Bezugswert zur Charakterisierung der Festigkeit verwendet, manchmal auch die Zugfestigkeit. Die im Zugversuch ermittelte obere Streckgrenze ist dabei stark abhängig von den Messbedingungen, der verwendeten Prüfmaschine und deren Ausrichtung. Für eine bestimmte Prüfmaschine streut der Wert außerdem besonders stark. Für Kaltumformungen ist die untere Streckgrenze ein relevanter Parameter zur Bestimmung der Umformfähigkeit eines Stahlflachprodukts. Diese ist allerdings schwer oder unmöglich zu ermitteln, wenn das Material nach dem Lüdersbereich nicht verfestigt. In diesem Fall ist die Zugfestigkeit außerdem nicht definiert. An Stelle der unteren Streckgrenze wird daher die Plateauhöhe geschätzt, für die als Maß die 0,5%-Dehngrenze (Rp0,5) angesetzt wird, weil dieser Wert eindeutig zu ermitteln ist (Figur 1). Der häufig zur Charakterisierung von ungealterten Stahlflachprodukten ermittelte Parameter der 0,2%-Dehngrenze (Rp0,2) ist bei gealterten Proben nicht zuverlässig, weil er zu nah an der oberen Streckgrenze und in einem Bereich liegt, in dem die Spannung sich noch nicht stabilisiert hat. Aus diesen Gründen wird hier die 0,5%-Dehngrenze (Rp0,5) als relevantes Maß für die Festigkeit der Proben ermittelt. Weiterhin wurde aus den Zugversuchen die Bruchdehnung (A) der Proben ermittelt. Alle Messungen der 0,5%-Dehngrenze (Rp0,5) und der Bruchdehnung (A) wurden dabei entlang der Walzrichtung (0°) und in der Ebene des Stahlflachprodukts in 10°-Schritten in einem Winkelbereich von 10° bis 170° zur Walzrichtung vorgenommen, um die (An-)Isotropie der Dehngrenze (Rp0,5) und der Bruchdehnung (A) in der Blechebene zu erfassen. Die ermittelte Abhängigkeit der Bruchdehnung A($\alpha$) vom Winkel $\alpha$ zur Walzrichtung (0°) ist in einem Kreisdiagramm in Figur 2 dargestellt, wobei Figur 2a die Ergebnisse der untersuchten Proben 1 bis 13 und Figur 2b die Ergebnisse der untersuchten Proben 14 bis 26 zeigt. Die ermittelte Abhängigkeit der 0,5%-Dehngrenze Rp0,5($\alpha$) vom Winkel $\alpha$ zur Walzrichtung (0°) ist in dem Kreisdiagramm der Figur 3 dargestellt, wobei Figur 3a die Ergebnisse der untersuchten Proben 1 bis 13 und Figur 3b die Ergebnisse der untersuchten Proben 14 bis 26 zeigt.

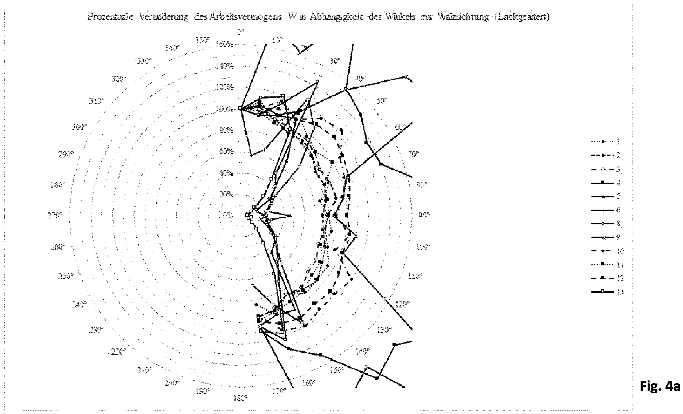

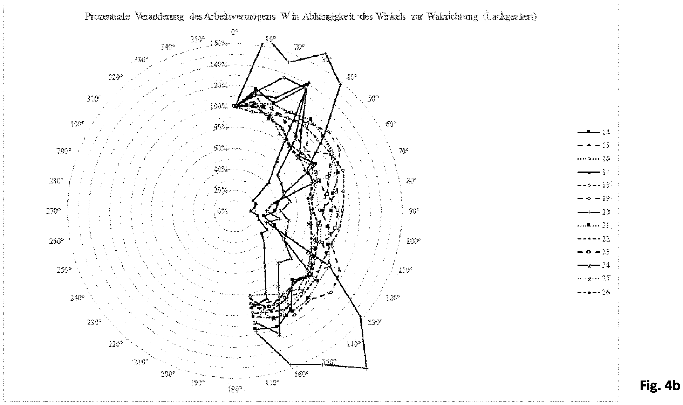

Aus den ermittelten Messwerten für die Abhängigkeit der 0,5%-Dehngrenze (Rp0,5) und der Bruchdehnung (A) vom Winkel $\alpha$ zur Walzrichtung wurde der für Kaltumformungen relevante Parameter des Arbeitsvermögens W($\alpha$), definiert als das Produkt aus Bruchdehnung A($\alpha$) und 0,5%-Dehngrenze Rp0,5($\alpha$), rechnerisch ermittelt. Das Ergebnis des so ermittelten Arbeitsvermögens W($\alpha$) in Abhängigkeit des Winkels $\alpha$ zur Walzrichtung (0°) ist in den Kreisdiagrammen der Figur 4 dargestellt, wobei Figur 4a die Ergebnisse der Proben gem. den Beispielen 1 bis 13 und Figur 4b die Ergebnisse der Proben gem. den Beispielen 14 bis 26 zeigt.

Es ist aus den Figuren 2 bis 4 zu erkennen, dass die erfindungsgemäßen Proben im Vergleich zu den (im Durchlaufglühofen nicht aufgestickten) Vergleichsbeispielen (Beispiele 4 bis 9, 13, 14, 17, 20 und 24) eine wesentlich bessere Isotropie in Bezug auf die 0,5%-Dehngrenze (Rp0,5), die Bruchdehnung (A) und das daraus als Produkt gebildete Arbeitsvermögen W($\alpha$) aufweisen. Aus Figur 2 ist zu erkennen, dass die erfindungsgemäßen Proben eine Bruchdehnung A($\alpha$) aufweisen, die in der Blechebene in einem Bereich von 60 % bis 140 % der Bruchdehnung in Walzrichtung A(0°) liegen. Aus Figur 3 ist zu erkennen, dass die erfindungsgemäßen Proben eine vom Winkel $\alpha$ zur Walzrichtung (0°) abhängige 0,5%-Dehngrenze (Rp0,5), aufweisen, die in der Blechebene in einem Bereich von 90 % bis 110 % der Dehngrenze in Walzrichtung Rp0,5(0°) liegen. Das Arbeitsvermögen W($\alpha$) der erfindungsgemäßen Proben liegt in der Blechebene, abhängig vom Winkel $\alpha$ zur Walzrichtung (0°), in einem Bereich von 60 % bis 140 % des Arbeitsvermögens in Walzrichtung W(0°), wie aus Figur 4 ersichtlich. Die Vergleichsbeispiele weisen demgegenüber eine wesentlich höhere Anisotropie der Bruchdehnung (A), der 0,5%-Dehngrenze (Rp0,5) und des Arbeitsvermögens auf, wie aus den Figuren 2 bis 4 zu erkennen.

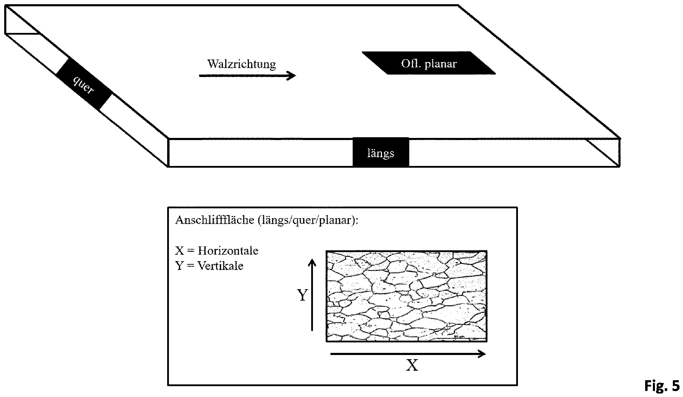

Zur Bestimmung des Korngefüges der Stahlflachprodukte wurden Schliffe der Proben in Ebenen längs und quer zur Walzrichtung sowie in planaren Ebenen der Bleche angefertigt. Die Schnittebenen sind in Figur 5 verdeutlicht. Aus den Schliffen wurde die Korngröße und die Kornstreckung durch mikrophotographische Untersuchung der Schnittflächen der Probe ermittelt. Bei diesen Mikrogefügeaufnahmen wird die Anzahl der Schnittpunkte gezählt, die zwischen einem Rasternetz und den Korngrenzen auftreten. Die mittlere Korngröße ergibt sich aus dem Mittelwert des Linienschnittsegments (mittlere Sehnenlänge). In Figur 5 ist die Kornstreckung bzw. die Streckung der Sehnenlänge der Körner des Stahlgefüges anhand der Richtungen x (horizontal, längs der Walzrichtung) und y (vertikal, in Dickenrichtung des Stahlflachprodukts) erläutert. In x-Richtung des Korns wird die horizontale Sehnenlänge S_H ermittelt. Senkrecht hierzu in y-Richtung wird die vertikale Sehnenlänge S_V ermittelt. Dies geschieht in Schliffen, die sowohl längs als auch quer zur Walzrichtung aufgenommen wurden. Bei der Ermittlung der Sehnenlängen wird nicht jedes Korn individuell vermessen, sondern ein gleichförmiges Gitter über das Gefügebild gelegt und mit Hilfe der Gitterlänge sowie der Anzahl der Schnittpunkte eine Sehnenlänge ermittelt, die als Ersatzgröße für die Korngröße genutzt werden kann. Die mittlere horizontale bzw. vertikale Sehnenlänge entspricht dem Mittelwert der Auswertung aller aufgenommenen Gefügebereiche. Die Kornstreckung S ist definiert als: S = S_H/S_V bzw. S = x/y.

Die (gem. ASTM E 112 und DIN EN ISO 643 sowie mittels Vergleichsbilder ermittelte) Korngröße () und die (im Linienschnittverfahren ermittelte) Kornstreckung S sowie die mittlere Sehnenlänge der Proben ist in **Tabelle 3** angegeben. Die Proben weisen alle eine mittlere Sehnenlänge im Bereich von 3,3 bis 5,4 $\mu$m auf. Die richtungsabhängige Kornstreckung (S) in Walzrichtung (0°) liegt in den Längsschnitten des Stahlflachprodukts bei mindestens 1,4 und in den Planarschnitten des Stahlflachprodukts bei mindestens 1,1. Die Kornstreckung (S) quer zur Walzrichtung (90°) weist einen Wert von mindestens 1,2 auf. Es konnte hierbei kein wesentlicher Unterschied zwischen den erfindungsgemäßen Proben und den Vergleichsproben festgestellt werden.

Daraus lässt sich schließen, dass die höhere Festigkeit der erfindungsgemäßen Proben nicht über eine Kornfeinung eingestellt wird, sondern maßgeblich über die durch das Aufsticken im Durchlaufglühofen erzeugte Mischkristallverfestigung erzielt wird. Weiterhin ergibt sich, dass die verbesserte Isotropie der mechanischen Eigenschaften der erfindungsgemäßen Proben trotz einer (durch das Kaltwalzen hervorgerufenen) Anisotropie im Gefüge erzielt werden kann. Die auch bei den erfindungsgemäßen Proben vorhandene Anisotropie des Gefüges ergibt sich aus der Kornstreckung S, die bei den erfindungsgemäßen Proben vergleichbar mit der Kornstreckung der Vergleichsproben ist. Die durch das Aufsticken im Durchlaufglühofen erzeugte Mischkristallverfestigung führt daher nicht nur zu einer Erhöhung der Festigkeit (Zugfestigkeit Rm) sondern auch zu einer Verbesserung der Homogenität der mechanischen Kennwerte wie Bruchdehnung A und 0,5%-Dehngrenze Rp0,5 sowie des sich daraus ergebenden Arbeitsvermögens W = A · Rp0,5.

**Tabelle 1**

| Beispiel | Einordnung | C | Mn | P | Si | Al | Cu | Cr | Nb [Gew.-%] | Ti | S | Sn | B | Mo | Ni | N_0 |
|---|---|---|---|---|---|---|---|---|---|---|---|---|---|---|---|---|
| 1 | erfindungsgemäß | 0,070 | 0,31 | 0,016 | 0,009 | 0,013 | 0,011 | 0,020 | 0,0010 | 0,0005 | 0,009 | 0,002 | 0,0003 | 0,001 | 0,018 | 0,0117 |
| 2 | erfindungsgemäß | 0,073 | 0,33 | 0,013 | 0,011 | 0,015 | 0,027 | 0,029 | 0,0008 | 0,0004 | 0,007 | 0,006 | 0,0002 | 0,003 | 0,016 | 0,0123 |
| 3 | erfindungsgemäß | 0,069 | 0,32 | 0,016 | 0,007 | 0,016 | 0,008 | 0,025 | 0,0009 | 0,0008 | 0,007 | 0,006 | 0,0003 | 0,001 | 0,017 | 0,0120 |
| 4 | Vergleichsbeispiel | 0,032 | 0,25 | 0,011 | 0,016 | 0,040 | 0,009 | 0,024 | 0,0010 | 0,0009 | 0,007 | 0,002 | 0,0002 | 0,002 | 0,016 | 0,0040 |
| 5 | Vergleichsbeispiel | 0,035 | 0,23 | 0,014 | 0,013 | 0,037 | 0,009 | 0,032 | 0,0010 | 0,0008 | 0,007 | 0,002 | 0,0003 | 0,003 | 0,019 | 0,0046 |
| 6 | Vergleichsbeispiel | 0,038 | 0,25 | 0,011 | 0,007 | 0,039 | 0,009 | 0,029 | 0,0010 | 0,0004 | 0,006 | 0,002 | 0,0003 | 0,003 | 0,016 | 0,0037 |
| 7 | Vergleichsbeispiel | 0,034 | 0,25 | 0,009 | 0,013 | 0,036 | 0,010 | 0,026 | 0,0010 | 0,0007 | 0,013 | 0,006 | 0,0003 | 0,003 | 0,018 | 0,0041 |
| 8 | Vergleichsbeispiel | 0,058 | 0,29 | 0,009 | 0,010 | 0,031 | 0,011 | 0,046 | 0,0010 | 0,0008 | 0,003 | 0,004 | 0,0003 | 0,004 | 0,020 | 0,0059 |
| 9 | Vergleichsbeispiel | 0,063 | 0,29 | 0,012 | 0,016 | 0,033 | 0,014 | 0,047 | 0,0010 | 0,0008 | 0,007 | 0,007 | 0,0003 | 0,002 | 0,021 | 0,0054 |
| 10 | erfindungsgemäß | 0,044 | 0,23 | 0,013 | 0,013 | 0,032 | 0,007 | 0,027 | 0,0010 | 0,0010 | 0,004 | 0,008 | 0,0003 | 0,002 | 0,018 | 0,0045 |
| 11 | erfindungsgemäß | 0,036 | 0,22 | 0,014 | 0,010 | 0,035 | 0,009 | 0,024 | 0,0010 | 0,0007 | 0,007 | 0,002 | 0,0003 | 0,003 | 0,015 | 0,0048 |
| 12 | erfindungsgemäß | 0,038 | 0,23 | 0,013 | 0,013 | 0,033 | 0,013 | 0,026 | 0,0008 | 0,0007 | 0,006 | 0,002 | 0,0003 | 0,003 | 0,017 | 0,0039 |
| 13 | Vergleichsbeispiel | 0,066 | 0,24 | 0,008 | 0,019 | 0,064 | 0,018 | 0,055 | 0,0010 | 0,0010 | 0,006 | 0,006 | 0,0003 | 0,003 | 0,016 | 0,0052 |
| 14 | Vergleichsbeispiel | 0,730 | 0,31 | 0,013 | 0,020 | 0,035 | 0,008 | 0,045 | 0,0010 | 0,0007 | 0,012 | 0,008 | 0,0004 | 0,002 | 0,018 | 0,0087 |
| 15 | erfindungsgemäß | 0,069 | 0,31 | 0,013 | 0,012 | 0,018 | 0,007 | 0,027 | 0,0010 | 0,0009 | 0,003 | 0,002 | 0,0003 | 0,003 | 0,016 | 0,0133 |
| 16 | erfindungsgemäß | 0,036 | 0,22 | 0,014 | 0,010 | 0,035 | 0,009 | 0,024 | 0,0009 | 0,0007 | 0,007 | 0,003 | 0,0002 | 0,002 | 0,015 | 0,0048 |
| 17 | Vergleichsbeispiel | 0,064 | 0,28 | 0,009 | 0,019 | 0,033 | 0,009 | 0,047 | 0,0010 | 0,0011 | 0,006 | 0,002 | 0,0003 | 0,002 | 0,018 | 0,0048 |
| 18 | erfindungsgemäß | 0,069 | 0,27 | 0,014 | 0,019 | 0,011 | 0,034 | 0,028 | 0,0020 | 0,0003 | 0,011 | 0,002 | 0,0004 | 0,004 | 0,022 | 0,0108 |
| 19 | erfindungsgemäß | 0,052 | 0,27 | 0,012 | 0,020 | 0,024 | 0,017 | 0,030 | 0,0003 | 0,0002 | 0,004 | 0,003 | 0,0004 | 0,003 | 0,015 | 0,0054 |
| 20 | Vergleichsbeispiel | 0,071 | 0,31 | 0,011 | 0,006 | 0,010 | 0,010 | 0,028 | 0,0010 | 0,0004 | 0,008 | 0,002 | 0,0003 | 0,002 | 0,012 | 0,0190 |
| 21 | erfindungsgemäß | 0,021 | 0,21 | 0,010 | 0,005 | 0,022 | 0,014 | 0,021 | 0,0010 | 0,0010 | 0,010 | 0,002 | 0,0008 | 0,004 | 0,020 | 0,0039 |
| 22 | erfindungsgemäß | 0,071 | 0,31 | 0,013 | 0,010 | 0,013 | 0,010 | 0,036 | 0,0010 | 0,0005 | 0,010 | 0,002 | 0,0003 | 0,002 | 0,015 | 0,0113 |
| 23 | erfindungsgemäß | 0,038 | 0,17 | 0,012 | 0,01 | 0,036 | 0,009 | 0,020 | 0,0009 | 0,0006 | 0,011 | 0,007 | 0,0003 | 0,003 | 0,017 | 0,0041 |
| 24 | Vergleichsbeispiel | 0,108 | 0,43 | 0,009 | 0,017 | 0,017 | 0,013 | 0,045 | 0,0009 | 0,0005 | 0,012 | 0,004 | 0,0004 | 0,004 | 0,015 | 0,0118 |
| 25 | erfindungsgemäß | 0,098 | 0,34 | 0,015 | 0,014 | 0,013 | 0,022 | 0,027 | 0,0008 | 0,0007 | 0,011 | 0,004 | 0,0005 | 0,002 | 0,021 | 0,0131 |
| 26 | erfindungsgemäß | 0,041 | 0,50 | 0,011 | 0,016 | 0,028 | 0,008 | 0,034 | 0,0009 | 0,0008 | 0,006 | 0,008 | 0,0003 | 0,003 | 0,020 | 0,0049 |

**Tabelle 2**

| Beispiel | Einordnung | N (nach Aufstickung) [Gew-%] | D [mm] | NWG [%] | NH3 [Vol. %] | Rp0,5 [MPa] | A [%] | Rm [MPa] |
|---|---|---|---|---|---|---|---|---|
| | | | | | | in Walzrichtung | | |
| 1 | erfindungsgemäß | 0,045 | 0,268 | 12,0 | 0,40 | 681 | 9,9 | 708 |
| 2 | erfindungsgemäß | 0,041 | 0,189 | 16,0 | 0,30 | 785 | 6,6 | 797 |
| 3 | erfindungsgemäß | 0,018 | 0,268 | 10,0 | 0,08 | 615 | 9,7 | 648 |
| 4 | Vergleichsbeispiel | - | 0,155 | 24,0 | - | 635 | 1,5 | 636 |
| 5 | Vergleichsbeispiel | - | 0,222 | 0,8 | - | 431 | 21,7 | 431 |
| 6 | Vergleichsbeispiel | - | 0,173 | 10,0 | - | 494 | 8,1 | 497 |
| 7 | Vergleichsbeispiel | - | 0,160 | 22,0 | - | - | 0,3 | 603 |
| 8 | Vergleichsbeispiel | - | 0,192 | 1,2 | - | 439 | 16 | 458 |
| 9 | Vergleichsbeispiel | - | 0,184 | 11,0 | - | 532 | 1,4 | 532 |
| 10 | erfindungsgemäß | 0,018 | 0,132 | 8,0 | 0,20 | 586 | 7,3 | 587 |
| 11 | erfindungsgemäß | 0,018 | 0,182 | 17,0 | 0,20 | 624 | 6,9 | 639 |
| 12 | erfindungsgemäß | 0,018 | 0,211 | 1,2 | 0,17 | 467 | 16,6 | 489 |
| 13 | Vergleichsbeispiel | - | 0,224 | 1,4 | - | 427 | 11,8 | 454 |
| 14 | Vergleichsbeispiel | - | 0,230 | 7,0 | - | 547 | 4,3 | 569 |
| 15 | erfindungsgemäß | 0,016 | 0,310 | 10,0 | 0,04 | 606 | 9,8 | 614 |
| 16 | erfindungsgemäß | 0,014 | 0,209 | 8,0 | 0,20 | 549 | 7,1 | 553 |
| 17 | Vergleichsbeispiel | - | 0,162 | 1,4 | - | 418 | 12,1 | 431 |
| 18 | erfindungsgemäß | 0,025 | 0,223 | 1,0 | 0,15 | 464 | 17,4 | 483 |
| 19 | erfindungsgemäß | 0,018 | 0,202 | 8,0 | 0,20 | 554 | 9,3 | 562 |
| 20 | Vergleichsbeispiel | - | 0,322 | 11,0 | - | 627 | 4,1 | 639 |
| 21 | erfindungsgemäß | 0,015 | 0,380 | 10 | 0,23 | 496 | 12,4 | 513 |
| 22 | erfindungsgemäß | 0,072 | 0,241 | 10,0 | 1,47 | 788 | 7,2 | 798 |
| 23 | erfindungsgemäß | 0,017 | 0,232 | 15,0 | 0,18 | 603 | 5,1 | 618 |
| 24 | Vergleichsbeispiel | 0,018 | 0,177 | 1,2 | 0,08 | 475 | 14,2 | 513 |
| 25 | erfindungsgemäß | 0,038 | 0,164 | 8,0 | 0,34 | 638 | 7,8 | 641 |
| 26 | erfindungsgemäß | 0,017 | 0,431 | 8,0 | 0,16 | 578 | 8,4 | 580 |

**Tabelle 3**

| Beispiel | Einordnung | NWG [%] | Lage | Korngröße | | | Kornstreckung | | Mittlere Sehnenlänge |
| | | | | KGA bei (500:1) | | mittels | | | |
| | | | | [ASTM] | [G643] | Vergleichsbild bei 200:1 | [Y/X] in % | [X/Y] | µm |
|---|---|---|---|---|---|---|---|---|---|
| 1 | | 12 | Längs | 13,3 | 13,3 | 12 | 64,2 | 1,6 | 3,5 |
| 1 | erfindungsgemäß | 12 | Quer | 13,3 | 13,3 | 12 | 75,6 | 1,3 | 3,5 |
| 1 | | 12 | Ofl. | 12,8 | 12,8 | 11-12 | 73,7 | 1,4 | 4,2 |
| 2 | | 16 | Längs | 13,2 | 13,2 | 12 | 67,4 | 1,5 | 3,7 |
| 2 | erfindungsgemäß | 16 | Quer | 13,4 | 13,3 | 12 | 75,2 | 1,3 | 3,4 |
| 2 | | 16 | Ofl. | 12,8 | 12,8 | 12 | 75,2 | 1,3 | 4,3 |
| 3 | | 10 | Längs | 13,4 | 13,4 | 12 | 62,8 | 1,6 | 3,4 |
| 3 | erfindungsgemäß | 10 | Quer | 13,3 | 13,3 | 12 | 74,8 | 1,3 | 3,5 |
| 3 | | 10 | Ofl. | 12,9 | 12,9 | 11-12 | 72,1 | 1,4 | 4,1 |
| 4 | | 24 | Längs | 13,1 | 13,1 | 12 | 47,8 | 2,1 | 3,9 |
| 4 | Vergleichsbeispiel | 24 | Quer | 13,2 | 13,2 | 12 | 56,0 | 1,8 | 3,7 |
| 4 | | 24 | Ofl. | 12,1 | 12,1 | 11-12 | 79,8 | 1,3 | 5,3 |
| 5 | | 0,8 | Längs | 12,8 | 12,8 | 11-12 | 67,0 | 1,5 | 4,3 |
| 5 | Vergleichsbeispiel | 0,8 | Quer | 13,1 | 13,1 | 11-12 | 72,3 | 1,4 | 3,8 |
| 5 | | 0,8 | Ofl. | 12,3 | 12,3 | 10-11 | 94,9 | 1,1 | 5,1 |
| 6 | | 10 | Längs | 12,9 | 12,8 | 11-12 | 59,1 | 1,7 | 4,2 |
| 6 | Vergleichsbeispiel | 10 | Quer | 13,2 | 13,2 | 11-12 | 80,0 | 1,3 | 3,7 |
| 6 | | 10 | Ofl. | 12,1 | 12,1 | 10-11 | 87,3 | 1,1 | 5,4 |
| 7 | | 22 | Längs | 13,2 | 13,2 | 11-12 | 56,4 | 1,8 | 3,7 |
| 7 | Vergleichsbeispiel | 22 | Quer | 13,2 | 13,2 | 11-12 | 62,2 | 1,6 | 3,7 |
| 7 | | 22 | Ofl. | 12,2 | 12,2 | 10/12 | 70,8 | 1,4 | 5,2 |
| 8 | | 1,2 | Längs | 13,2 | 13,2 | 11-12 | 65,9 | 1,5 | 3,7 |
| 8 | Vergleichsbeispiel | 1,2 | Quer | 13,4 | 13,3 | 11-12 | 76,2 | 1,3 | 3,5 |
| 8 | | 1,2 | Ofl. | 12,6 | 12,6 | 10/12 | 74,9 | 1,3 | 4,5 |
| 9 | | 11 | Längs | 13,3 | 13,3 | 12 | 68,8 | 1,5 | 3,6 |
| 9 | Vergleichsbeispiel | 11 | Quer | 13,4 | 13,3 | 11-12 | 64,4 | 1,6 | 3,5 |
| 9 | | 11 | Ofl. | 12,3 | 12,2 | 10/12 | 68,8 | 1,5 | 5,1 |
| 10 | | 8 | Längs | 13,2 | 13,2 | 11-12 | 58,2 | 1,7 | 3,7 |
| 10 | erfindungsgemäß | 8 | Quer | 13,5 | 13,4 | 11-12 | 73,0 | 1,4 | 3,4 |
| 10 | | 8 | Ofl. | 12,9 | 12,9 | 11-12 | 81,3 | 1,2 | 4,1 |
| 11 | | 17 | Längs | 13,0 | 12,9 | 11-12 | 44,8 | 2,2 | 4,0 |
| 11 | erfindungsgemäß | 17 | Quer | 12,9 | 12,9 | 11-12 | 53,9 | 1,9 | 4,1 |
| 11 | | 17 | Ofl. | 12,3 | 12,2 | 10-11 | 82,0 | 1,2 | 5,1 |
| 12 | | 1,2 | Längs | 12,9 | 12,9 | 11-12 | 68,4 | 1,5 | 4,2 |
| 12 | erfindungsgemäß | 1,2 | Quer | 13,1 | 13,1 | 11-12 | 70,0 | 1,4 | 3,9 |
| 12 | | 1,2 | Ofl. | 12,3 | 12,3 | 10/11 | 93,7 | 1,1 | 5,0 |
| 13 | | 1,4 | Längs | 13,3 | 13,3 | 11-12 | 63,9 | 1,6 | 3,6 |
| 13 | Vergleichsbeispiel | 1,4 | Quer | 13,3 | 13,3 | 11-12 | 75,7 | 1,3 | 3,5 |
| 13 | | 1,4 | Ofl. | 12,7 | 12,7 | 11-12 | 76,8 | 1,3 | 4,4 |
| 14 | | 7 | Längs | 13,5 | 13,5 | 12 | 67,0 | 1,5 | 3,3 |
| 14 | Vergleichsbeispiel | 7 | Quer | 13,4 | 13,4 | 12 | 77,3 | 1,3 | 3,4 |
| 14 | | 7 | Ofl. | 12,9 | 12,9 | 11-12 | 74,1 | 1,3 | 4,1 |

| Nr. | | | | | | | | | |
|---|---|---|---|---|---|---|---|---|---|
| 15 | erfindungsgemäß | 10 | Längs | 13,5 | 13,5 | 12 | 63,8 | 1,6 | 3,3 |
| 15 | | 10 | Quer | 13,4 | 13,4 | 12 | 75,1 | 1,3 | 3,4 |
| 15 | | 10 | Ofl. | 13,0 | 13,0 | 11-12 | 74,2 | 1,4 | 4,0 |
| 16 | erfindungsgemäß | 8 | Längs | 13,3 | 13,3 | 12 | 60,1 | 1,7 | 3,6 |
| 16 | | 8 | Quer | 13,5 | 13,5 | 12 | 72,3 | 1,4 | 3,3 |
| 16 | | 8 | Ofl. | 13,0 | 13,0 | 11-12 | 79,9 | 1,3 | 4,0 |
| 17 | Vergleichsbeispiel | 1,4 | Längs | 13,1 | 13,1 | 12 | 64,9 | 1,5 | 3,9 |
| 17 | | 1,4 | Quer | 13,3 | 13,3 | 11-12 | 77,0 | 1,3 | 3,6 |
| 17 | | 1,4 | Ofl. | 12,7 | 12,7 | 11-12 | 75,1 | 1,3 | 4,4 |
| 18 | erfindungsgemäß | 1 | Längs | 13,3 | 13,3 | 12 | 70,1 | 1,4 | 3,5 |
| 18 | | 1 | Quer | 13,4 | 13,4 | 12 | 77,3 | 1,3 | 3,4 |
| 18 | | 1 | Ofl. | 12,9 | 12,9 | 11-12 | 78,6 | 1,3 | 4,2 |
| 19 | erfindungsgemäß | 8 | Längs | 13,3 | 13,3 | 11-12 | 60,1 | 1,7 | 3,6 |
| 19 | | 8 | Quer | 13,5 | 13,4 | 12 | 75,7 | 1,3 | 3,3 |
| 19 | | 8 | Ofl. | 12,9 | 12,9 | 10/12 | 83,1 | 1,2 | 4,1 |
| 20 | Vergleichsbeispiel | 11 | Längs | 13,3 | 13,3 | 12 | 65,2 | 1,5 | 3,6 |
| 20 | | 11 | Quer | 13,4 | 13,4 | 12 | 77,4 | 1,3 | 3,4 |
| 20 | | 11 | Ofl. | 12,9 | 12,9 | 11-12 | 72,1 | 1,4 | 4,1 |
| 21 | erfindungsgemäß | 0,6 | Längs | 12,7 | 12,7 | 12 | 68,4 | 1,5 | 4,5 |
| 21 | | 0,6 | Quer | 12,9 | 12,9 | 12 | 71,1 | 1,4 | 4,1 |
| 21 | | 0,6 | Ofl. | 12,4 | 12,3 | 11-12 | 92,3 | 1,1 | 4,9 |
| 22 | erfindungsgemäß | 10 | Längs | 13,5 | 13,5 | 12 | 65,1 | 1,5 | 3,2 |
| 22 | | 10 | Quer | 13,3 | 13,3 | 12 | 77,3 | 1,3 | 3,5 |
| 22 | | 10 | Ofl. | 12,9 | 12,9 | 11-12 | 78,1 | 1,3 | 4,2 |
| 23 | erfindungsgemäß | 15 | Längs | 12,9 | 12,9 | 11-12 | 53,1 | 1,9 | 4,2 |
| 23 | | 15 | Quer | 12,7 | 12,7 | 12 | 55,7 | 1,8 | 4,4 |
| 23 | | 15 | Ofl. | 12,1 | 12,1 | 10/12 | 83,2 | 1,2 | 5,3 |
| 24 | Vergleichsbeispiel | 1,2 | Längs | 13,3 | 13,2 | 12 | 69,7 | 1,4 | 3,6 |
| 24 | | 1,2 | Quer | 13,3 | 13,3 | 11-12 | 74,2 | 1,3 | 3,5 |
| 24 | | 1,2 | Ofl. | 12,8 | 12,8 | 11-12 | 71,1 | 1,4 | 4,3 |
| 25 | erfindungsgemäß | 8 | Längs | 13,1 | 13,1 | 12 | 67,3 | 1,5 | 3,8 |
| 25 | | 8 | Quer | 13,0 | 13,0 | 12 | 81,1 | 1,2 | 4,0 |
| 25 | | 8 | Ofl. | 12,5 | 12,5 | 11-12 | 82,9 | 1,2 | 4,7 |
| 26 | erfindungsgemäß | 8 | Längs | 12,9 | 12,9 | 12 | 60,1 | 1,7 | 4,1 |
| 26 | | 8 | Quer | 13,3 | 13,3 | 12 | 69,7 | 1,4 | 3,6 |
| 26 | | 8 | Ofl. | 12,7 | 12,7 | 11-12 | 83,3 | 1,2 | 4,5 |

**Patentansprüche**

1. Kaltgewalztes Stahlflachprodukt für Verpackungen mit einer Dicke von weniger als 0,6 mm, welches aus einem Stahl entlang einer Walzrichtung von 0° kaltgewalzt worden ist und folgende Zusammensetzung in Bezug auf das Gewicht aufweist:

   - C: 0,02 - 0,1 %,
   - Si: < 0,03 %,
   - Mn: 0,17 - 0,5 %,
   - P: < 0,03 %,
   - S: 0,001 - 0,03 %,
   - Al: 0,002 - 0,1 %,

- N: 0,014 - 0,12 %, bevorzugt weniger als 0,07 %,
- optional Cr: < 0,1 %, bevorzugt 0,01 - 0,08%,
- optional Ni: < 0,1 %, bevorzugt 0,01 - 0,05 %,
- optional Cu: < 0,1 %, bevorzugt 0,002 - 0,05 %,
- optional Ti: < 0,01 %,
- optional B: < 0,005 %,
- optional Nb: < 0,01 %,
- optional Mo: < 0,02 %,
- optional Sn: < 0,03 %,
- Rest Eisen und unvermeidbare Verunreinigungen,
- wobei von dem Stickstoff mindestens ein Gewichtsanteil von 0,01 % in ungebundener Form interstitiell im Stahl eingelagert ist und das Stahlflachprodukt in einem gealterten Zustand gemessen gemäß den Vorgaben aus der Beschreibung in Walzrichtung von 0° eine 0,5%-Dehngrenze (Rp0,5) von mindestens 450 MPa und eine Bruchdehnung (A) von mindestens 5% aufweist und das durch das Produkt aus Bruchdehnung (A) und 0,5%-Dehngrenze (Rp 0,5) definierte Arbeitsvermögen W($\alpha$) in Abhängigkeit des Winkels $\alpha$ zur Walzrichtung von 0° nicht weniger als 60 % und nicht mehr als 140 % des Arbeitsvermögens in Walzrichtung W(0°) beträgt.

2. Stahlflachprodukt nach Anspruch 1, **dadurch gekennzeichnet, dass** die 0,5%-Dehngrenze (Rp0,5) in Abhängigkeit des Winkels $\alpha$ zur Walzrichtung von 0° nicht weniger als 90 % und nicht mehr als 110 % der 0,5%-Dehngrenze in Walzrichtung Rp0,5 (0°) beträgt.

3. Stahlflachprodukt nach einem der voranstehenden Ansprüche, **dadurch gekennzeichnet, dass** die Bruchdehnung A($\alpha$) in Abhängigkeit des Winkels $\alpha$ zur Walzrichtung von 0° nicht weniger als 60 % und nicht mehr als 140 % der Bruchdehnung in Walzrichtung A(0°) beträgt.

4. Stahlflachprodukt nach einem der voranstehenden Ansprüche, **dadurch gekennzeichnet, dass** das Arbeitsvermögen W($\alpha$) in Abhängigkeit des Winkels $\alpha$ zur Walzrichtung von 0° mindestens 70 % und höchstens 130 % des Arbeitsvermögens in Walzrichtung W(0°) beträgt.

5. Stahlflachprodukt nach einem der voranstehenden Ansprüche, **dadurch gekennzeichnet, dass** die Körner des Stahlgefüges eine mittlere Sehnenlänge von 3,0 bis 6,0 $\mu$m aufweisen.

6. Stahlflachprodukt nach einem der voranstehenden Ansprüche, **dadurch gekennzeichnet, dass** die Körner des Stahlgefüges eine mittlere horizontale Sehnenlänge (S_H) und eine mittlere vertikale Sehnenlänge (S_V) sowie eine als das Verhältnis der mittleren horizontalen Sehnenlänge (S_H) und der mittleren vertikalen Sehnenlänge (S_V) definierte Kornstreckung (S) aufweisen, wobei die richtungsabhängige Kornstreckung (S) in Walzrichtung von 0° in Längsschnitten des Stahlflachprodukts einen Wert von mindestens 1,4 und in Planarschnitten des Stahlflachprodukts einen Wert von mindestens 1,1 aufweist und/oder dass die Kornstreckung (S) quer zur Walzrichtung im Winkel von 90° einen Wert von mindestens 1,2 aufweist.

7. Stahlflachprodukt nach einem der voranstehenden Ansprüche, wobei das Stahlflachprodukt erhältlich ist durch

- Warmwalzen einer Bramme aus dem Stahl zu einem Warmband,
- Aufwickeln des Warmbands bei einer Aufwickeltemperatur von 500°C bis 750°C,
- Kaltwalzen des Warmbands bei einem Reduktionsverhältnis von mindestens 80 % zu einem kaltgewalzten Stahlband,
- Aufsticken des kaltgewalzten Stahlbands in einem Glühofen, insbesondere einem Durchlaufglühofen, unter Anwesenheit eines Stickstoffdonors bei einer Temperatur von mindestens 550°C und Rekristallisationsglühen des kaltgewalzten Stahlbands in einem Glühofen bei einer Glühtemperatur von mindestens 630°C,
- Abkühlen des rekristallisierend geglühten Stahlflachprodukts auf Raumtemperatur,
- Nachwalzen des rekristallisierten Stahlbands bei einem Nachwalzgrad von 0,2 % bis 45%,
- wobei die Eigenschaften des Stahlflachprodukts nach einer Alterung des nachgewalzten Stahlbands erhalten werden.

8. Stahlflachprodukt nach dem voranstehenden Anspruch, **dadurch gekennzeichnet, dass** die Endwalztemperatur beim Warmwalzen der Bramme größer als die Ar3 Temperatur ist.

9. Stahlflachprodukt nach den Ansprüchen 7 oder 8, **dadurch gekennzeichnet, dass** die Verweildauer des Stahlflachprodukts im Glühofen zwischen 10 Sekunden bis 400 Sekunden liegt.

10. Stahlflachprodukt nach einem der Ansprüche 7 bis 9, **dadurch gekennzeichnet, dass** der Nachwalzgrad 18 % oder kleiner ist.

11. Stahlflachprodukt nach einem der Ansprüche 7 bis 10, wobei es sich bei dem Stickstoffdonor um Ammoniakgas handelt und/oder wobei der Stickstoffdonor bei den Temperaturen im Glühofen zumindest teilweise zu atomarem Stickstoff dissoziiert ist.

12. Stahlflachprodukt nach einem der Ansprüche 7 bis 11, **dadurch gekennzeichnet, dass** das Warmband einen anfänglichen Stickstoffanteil $N_0$ im Bereich von 0,001 Gew.% bis 0,016 Gew.% aufweist und dass der Gewichtsanteil des Stickstoffs in dem Stahlflachprodukt beim Glühen durch die Anwesenheit des Stickstoffdonors um $\Delta N \geq 0,002$ Gew. % erhöht wird.

13. Stahlflachprodukt nach einem der voranstehenden Ansprüche, wobei der gealterte Zustand des Stahlflachprodukts entweder auf natürliche Weise durch eine längere Lagerung und/oder durch eine Lackierung mit anschließender Trocknung, oder auf künstliche Weise durch Erwärmung des Stahlflachprodukts für 20 Minuten auf Temperaturen im Bereich von 200°C bis 210 °C herbeigeführt ist.

14. Verwendung eines Stahlflachprodukts nach einem der voranstehenden Ansprüche zur Herstellung von Aufreißdeckeln von Dosen oder zur Herstellung von Aerosoldosen oder Aerosoldosenkomponenten, wobei das Stahlflachprodukt vor einer Umformung bevorzugt mit einer Oberflächenbeschichtung versehen wird, insbesondere mit einer elektrolytisch aufgebrachten Zinn- oder Chrom-/Chromoxid-Beschichtung und/oder einer organischen Beschichtung, insbesondere in Form eines Lacks oder einer Polymerfolie.

## Claims

1. Cold-rolled flat steel product for packaging with a thickness of less than 0.6 mm, which has been cold-rolled from a steel along a rolling direction of 0° and has the following composition in terms of weight:

   - C: 0.02 - 0.1 %,
   - Si: < 0.03 %,
   - Mn: 0.17 - 0.5 %,
   - P: < 0.03 %,
   - S: 0.001 - 0.03 %,
   - Al: 0.002 - 0.1 %,
   - N: 0.014 - 0.12 %, preferably less than 0.07 %,
   - optional Cr: < 0.1 %, preferably 0.01 - 0.08 %,
   - optional Ni: < 0.1 %, preferably 0.01 - 0.05 %,
   - optional Cu: < 0.1 %, preferably 0.002 - 0.05 %,
   - optional Ti: < 0.01 %,
   - optional B: < 0.005 %,
   - optional Nb: < 0.01 %,
   - optional Mo: < 0.02 %,
   - optional Sn: < 0.03 %,
   - Residual iron and unavoidable impurities,
   - wherein at least 0.01 % by weight of the nitrogen is interstitially incorporated in the steel in unbound form and the flat steel product has in an aged state, measured in accordance with the specifications from the description, in the rolling direction of 0° a 0.5% yield strength (Rp0,5) of at least 450 MPa and an elongation at break (A) of at least 5 %, and the working capacity $W(\alpha)$ defined by the product of the elongation at break (A) and the 0.5% yield strength yield strength (Rp 0.5) is not less than 60 % and not more than 140 % of the working capacity in the rolling direction W(0°) as a function of the angle $\alpha$ to the rolling direction of 0° .

2. Flat steel product according to claim 1, **characterised in that** the 0.5% yield strength (Rp0.5) as a function of the angle $\alpha$ to the rolling direction of 0° is not less than 90% and not more than 110% of the 0.5% yield strength in the rolling direction Rp0.5 (0°).

3. Flat steel product according to any one of the preceding claims, **characterised in that** the elongation at break A($\alpha$) as a function of the angle $\alpha$ to the rolling direction of 0° is not less than 60 % and not more than 140 % of the elongation at break in the rolling direction A(0°).

4. Flat steel product according to any one of the preceding claims, **characterised in that** the working capacity W($\alpha$) as a function of the angle $\alpha$ to the rolling direction of 0° is at least 70 % and at most 130 % of the working capacity in the rolling direction W(0°).

5. Flat steel product according to any one of the preceding claims, **characterised in that** the grains of the steel structure have an average chord length of 3.0 to 6.0 $\mu$m.

6. Flat steel product according to any one of the preceding claims, **characterised in that** the grains of the steel structure have a mean horizontal chord length (S_H) and a mean vertical chord length (S_V) as well as a grain elongation (S) defined as the ratio of the mean horizontal chord length (S_H) and the mean vertical chord length (S_V), wherein the direction-dependent grain elongation (S) in the rolling direction of 0° has a value of at least 1.4 in longitudinal sections of the flat steel product and a value of at least 1.1 in planar sections of the flat steel product, and/or that the grain elongation (S) transverse to the rolling direction at an angle of 90° has a value of at least 1.2.

7. Flat steel product according to any one of the preceding claims, wherein the flat steel product is obtainable by

   - Hot rolling of a slab from the steel into a hot strip,
   - Winding of the hot strip at a winding temperature of 500°C to 750°C,
   - Cold rolling of the hot-rolled strip with a reduction ratio of at least 80 % to a cold-rolled steel strip,
   - Nitriding the cold-rolled steel strip in an annealing furnace, in particular a continuous annealing furnace, in the presence of a nitrogen donor at a temperature of at least 550°C, and recrystallisation annealing of the cold-rolled steel strip in an annealing furnace at an annealing temperature of at least 630°C,
   - Cooling the recrystallising annealed flat steel product to room temperature,
   - Rerolling of the recrystallised steel strip at a rerolling degree of 0.2 % to 45 %,
   - whereby the properties of the flat steel product are obtained after ageing of the rerolled steel strip.

8. Flat steel product according to the preceding claim, **characterised in that** the final rolling temperature during hot rolling of the slab is greater than the Ar3 temperature.

9. Flat steel product according to claims 7 or 8, **characterised in that** the dwell time of the flat steel product in the annealing furnace is between 10 seconds and 400 seconds.

10. Flat steel product according to any one of claims 7 to 9, **characterised in that** the degree of rerolling is 18 % or less.

11. Flat steel product according to any one of claims 7 to 10, wherein the nitrogen donor is ammonia gas and/or wherein the nitrogen donor is at least partially dissociated to atomic nitrogen at the temperatures in the annealing furnace.

12. Flat steel product according to any one of claims 7 to 11, **characterised in that** the hot strip has an initial nitrogen content $N_0$ in the range from 0.001% to 0.016% by weight and that the weight proportion of nitrogen in the flat steel product is increased by $\Delta N \geq 0.002$ % by weight during annealing due to the presence of the nitrogen donor.

13. Flat steel product according to any one of the preceding claims, wherein the aged state of the flat steel product is obtained either naturally by prolonged storage and/or by lacquering with subsequent drying, or artificially by heating the flat steel product for 20 minutes to temperatures in the range from 200°C to 210°C.

14. Use of a flat steel product according to any one of the preceding claims for the manufacture of tear-off lids of cans or for the manufacture of aerosol cans or aerosol can components, wherein the flat steel product is preferably prior to forming provided with a surface coating, in particular with an electrolytically applied tin or chromium/chromium oxide coating and/or an organic coating, in particular in the form of a lacquer or a polymer film.

**Revendications**

1. Produit plat en acier laminé à froid pour conditionnements ayant une épaisseur inférieure à 0,6 mm, qui a été laminé à froid à partir d'un acier le long d'une direction de laminage de 0° et présente la composition suivante par rapport au poids :

- C : 0,02 - 0,1 %,
- Si : < 0,03 %,
- Mn : 0,17 - 0,5 %,
- P : < 0,03 %,
- S : 0,001 - 0,03 %,
- Al : 0,002 - 0,1 %,
- N : 0,014 - 0,12 %, de préférence moins de 0,07 %,
- éventuellement Cr : < 0,1 %, de préférence 0,01 - 0,08 %,
- éventuellement Ni : < 0,1 %, de préférence 0,01 - 0,05 %,
- éventuellement Cu : < 0,1 %, de préférence 0,002 - 0,05 %,
- éventuellement Ti : < 0,01 %,
- éventuellement B : < 0,005 %,
- éventuellement Nb : < 0,01 %,
- éventuellement Mo : < 0,02 %,
- éventuellement Sn : < 0,03 %,
- le reste de fer et d'impuretés inévitables,
- dans lequel au moins une proportion en poids de 0,01 % de l'azote est incrustée sous une forme non liée sur le plan interstitiel dans l'acier et le produit plat en acier présente à l'état vieilli, mesuré selon les prescriptions de la description dans la direction de laminage de 0°, une limite d'élasticité à 0,5 % (Rp0,5) d'au moins 450 MPa et un allongement à la rupture (A) d'au moins 5 % et l'aptitude au travail W($\alpha$) définie par le produit de l'allongement à rupture (A) et de la limite d' élasticité à 0,5 % (Rp0, 5) en fonction de l'angle $\alpha$ par rapport à la direction de laminage de 0° n'est pas inférieure à 60 % et n'est pas supérieure à 140 % de l'aptitude au travail dans la direction de laminage W(0°).

2. Produit plat en acier selon la revendication 1, **caractérisé en ce que** la limite d'élasticité à 0,5 % (Rp0,5) en fonction de l'angle $\alpha$ par rapport à la direction de laminage de 0° n'est pas inférieure à 90 % et n'est pas supérieure à 110 % de la limite d'élasticité à 0,5 % dans la direction de laminage Rp0,5 (0°).

3. Produit plat en acier selon l'une des revendications précédentes, **caractérisé en ce que** l'allongement à rupture A($\alpha$) en fonction de l'angle $\alpha$ par rapport à la direction de laminage de 0° n'est pas inférieur à 60 % et n'est pas supérieur à 140 % de l'allongement à rupture dans la direction de laminage A(0°).

4. Produit plat en acier selon l'une des revendications précédentes, **caractérisé en ce que** l'aptitude au travail W($\alpha$) en fonction de l'angle $\alpha$ par rapport à la direction de laminage de 0° est d'au minimum 70 % et d'au maximum 130 % de l'aptitude au travail dans la direction de laminage W(0°).

5. Produit plat en acier selon l'une des revendications précédentes, **caractérisé en ce que** les grains du squelette en acier présentent une longueur moyenne de corde de 3,0 à 6,0 $\mu$m.

6. Produit plat en acier selon l'une des revendications précédentes, **caractérisé en ce que** les grains du squelette en acier présentent une longueur moyenne de corde horizontale (S_H) et une longueur moyenne de corde verticale (S_V) ainsi qu'une extension de grain (S) définie en tant que rapport de la longueur moyenne de corde horizontale (S_H) et la longueur moyenne de corde verticale (S_V), où l'extension de grain (S) dépendante de la direction dans la direction de laminage de 0° dans les coupes longitudinales du produit plat en acier présente une valeur d'au moins 1,4 et, dans les coupes planes du produit plat en acier, une valeur d'au moins 1,1 et/ou **en ce que** l'extension de grain (S) présente transversalement à la direction de laminage à l'angle de 90° une valeur d'au moins 1,2.

7. Produit plat en acier selon l'une des revendications précédentes, dans lequel le produit plat en acier peut être obtenu par

- laminage à chaud d'une brame à partir d'acier en une bande à chaud,
- enroulement de la bande à chaud à une température d'enroulement de 500 °C à 750 °C,
- laminage à froid de la bande à chaud à un rapport de réduction d'au moins 80 % en une bande en acier laminée à froid,
- nitruration de la bande en acier laminée à froid dans un four de recuit, en particulier un four de recuit continu, en présence d'un donneur d'azote à une température d'au moins 550 °C et recuit de recristallisation de la bande en acier laminée à froid dans un four de recuit à une température de recuit d'au moins 630 °C,
- refroidissement du produit plat en acier recuit par recristallisation à température ambiante,
- post-laminage de la bande en acier recristallisée à un degré de post-laminage de 0,2 % à 45 %,
- dans lequel les propriétés du produit plat en acier sont obtenues après un vieillissement de la bande en acier post-laminée.

8. Produit plat en acier selon la revendication précédente, **caractérisé en ce que** la température de laminage final lors du laminage à chaud de la brame est supérieure à la température Ar3.

9. Produit plat en acier selon les revendications 7 ou 8, **caractérisé en ce que** la durée de résidence du produit plat en acier dans le four de recuit est comprise entre 10 secondes à 400 secondes.

10. Produit plat en acier selon les revendications 7 à 9, **caractérisé en ce que** le degré de post-laminage est de 18 % ou moins.

11. Produit plat en acier selon les revendications 7 à 10, dans lequel le donneur d'azote est l'ammoniac gazeux et/ou dans lequel le donneur d'azote est dissocié aux températures dans le four de recuit au moins partiellement en azote atomique.

12. Produit plat en acier selon les revendications 7 à 11, **caractérisé en ce que** la bande à chaud présente une proportion de départ d'azote $N_0$ dans la plage de 0,001 % en poids à 0,016 % en poids et **en ce que** la proportion en poids de l'azote est augmentée dans le produit plat en acier lors du recuit grâce à la présence du donneur d'azote de $\Delta N \geq 0,002$ % en poids.

13. Produit plat en acier selon l'une des revendications précédentes, dans lequel l'état vieilli du produit plat en acier est provoqué soit de manière naturelle par un stockage plus long et/ou par un laquage avec un séchage consécutif, soit de manière artificielle par chauffage du produit plat en acier pendant 20 minutes à des températures dans la plage de 200 °C à 210 °C.

14. Utilisation d'un produit plat en acier selon l'une des revendications précédentes pour la fabrication d'opercules détachables de canettes ou pour la fabrication de bombes aérosols ou de composants de bombes aérosols, dans laquelle le produit plat en acier est doté, avant un formage, de préférence d'un revêtement superficiel, en particulier d'un revêtement en étain ou en chrome/oxyde de chrome déposé électrolytiquement et/ou d'un revêtement organique, en particulier sous la forme d'une laque ou d'un film polymère.

Fig. 1

Fig. 2a

Fig. 2b

Fig. 3a

Fig. 3b

Prozentuale Veränderung des Arbeitsvermögens W in Abhängigkeit des Winkels zur Walzrichtung (Lackgealtert)

**Fig. 4a**

Prozentuale Veränderung des Arbeitsvermögens W in Abhängigkeit des Winkels zur Walzrichtung (Lackgealtert)

**Fig. 4b**

Walzrichtung →

Ofl. planar

quer

längs

Anschliffffläche (längs/quer/planar):

X = Horizontale
Y = Vertikale

Y ↑

X →

**Fig. 5**

Einfluss der Alterung auf die Bruchdehnung in Abhängigkeit der Walzrichtung für Beispiel 5

— nicht gealtert
--■-- künstlich gealtert 20 min bei 200 °C
····■··· natürlich gealtert

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110076177 A1
- WO 2005068667 A